# EUROPEAN PATENT SPECIFICATION

(11) **EP 2 770 202 B1**
(45) Date of publication and mention of the grant of the patent: **12.10.2016**
(21) Application number: 13189974.2
(22) Date of filing: 24.10.2013
(51) Int. Cl.: F04B 7/00, F04B 49/22, F04B 53/10, F16K 31/06, F04B 17/02, F04B 1/06, F03C 1/40

(54) **Control valve, assembly method of control valve, and power generating apparatus of renewable energy type**
Steuerventil, Montageverfahren für Steuerventil und Stromerzeugungsvorrichtung des Typs erneuerbarer Energien
Soupape de commande, procédé d'assemblage de soupape de commande et appareil de génération d'énergie de type renouvelable

(30) Priority: 22.02.2013 WO PCT/JP2013/054458
(43) Date of publication of application: 27.08.2014
(73) Proprietor: MITSUBISHI HEAVY INDUSTRIES, LTD., Tokyo 108-8215 (JP)
(72) Inventor: Shimizu, Masayuki, TOKYO, 108-8215 (JP); Stein, Uwe, LOANHEAD, MIDLOTHIAN, LOTHIAN, EH209TB (GB); Lavender, Jack, LOANHEAD, MIDLOTHIAN, LOTHIAN, EH209TB (GB)
(74) Representative: Intès, Didier Gérard André

(56) References cited:
- EP-A1- 2 187 104
- EP-A1- 2 206 941
- WO-A2-2011/148653
- DE-A1- 19 834 121
- US-A1- 2013 022 484

## Description

### Technical Field

The present description relates to a control valve, an assembling method of the control valve, and a power generating apparatus of renewable energy type.

### BACKGROUND ART

In recent years, from the perspective of environmental preservation, power generating apparatuses of renewable energy type utilizing renewable energy, particularly wind farms formed by a group of wind turbine generators which generates power using wind power are becoming popular. In a wind turbine generator, a wind power received by a blade is converted into torque of a rotation shaft and this torque is transmitted to a generator by a power transmission mechanism and converted into electric power. As the power transmission mechanism, a hydraulic machine may be used.

Conventionally know as a hydraulic machine is a radial piston hydraulic machine having a plurality of pistons arranged in a circumferential direction around the rotation shaft.

In this type of hydraulic machine, a working chamber is formed by a piston and a cylinder, and an oil supply valve and an oil discharge valve are configured to control supply and discharge of working fluid for the working chamber. As the oil supply valve and the oil discharge valve, a control valve disclosed in Patent Literature 1 may be used for instance. The control valve includes a valve element, an armature, a rod for connecting for connecting the valve element and the armature, an electromagnet being capable of attracting the armature in one direction, and a biasing member being capable of biasing the valve element in an opposite direction.

EP 2206941 discloses an actuated valve, WO 2011/148653 discloses a power generating apparatus comprising valves, and DE 19834121 discloses a valve used in a fuel supply system for an internal combustion engine.

### Citation List

### Patent Literature

[PTL 1]
EP 2187104 A

### SUMMARY

### Technical Problem

In the control valve, in the case where the valve element being a separate member from the rod is connected to the rod, it requires high reliability to connect the rod to the valve element.

In this aspect, there is no description in Patent Literature 1 regarding the technique to improve the reliability of connection of the rod and the valve element.

It is an object of at least one embodiment of the present invention to provide a control valve of high reliability. It is also an object of at least one embodiment of the present invention to provide an assembling method of the control valve of high reliability. Another object of at least one embodiment of the present invention is to provide a power generating apparatus of renewable energy type provided with the control valve of high reliability.

### Solution to Problem

A control valve according to at least one embodiment of the present invention is to be arranged in a periphery of a working chamber formed by a cylinder and a piston, to control supply of working fluid to the working chamber or control discharge of the working fluid from the working chamber, and the control valve comprises:
a valve seat;
a rod having a first end and a second end;
a valve element unit which is connected to the first end of the rod and which has at least a valve element;
an armature connected to the second end of the rod;
a biasing member for biasing the armature in a biasing direction;
an electromagnet configured to attract the armature and drive the armature in a direction opposite to the biasing direction when electric power is supplied; and
a valve block including: a wall where the valve seat is formed; an inner passage for the working fluid with an open end bordered by the valve seat; a containing chamber for housing the armature and the electromagnet; and a through hole which extends between the wall and the containing chamber and into which the rod is inserted, and
the second end of the rod is configured to pass through the through hole.

In the above control valve, the second end of the rod can be passed through the through hole. Further, first the valve element unit is connected to the first end of the rod, the second end of the rod is inserted in the through hole, and then the armature is connected to the second end of the rod. Thus, the valve element unit can be connected to the rod in an operation-easy environment. This improves connection reliability between the valve element unit and the rod. As a result, the control valve attains high reliability.

In some embodiments, the valve element unit is connected to the first end by a retainer which is fixed to the first end of the rod. Further, the retainer may be fixed to the first end of the rod by interference fit. For instance, the retainer may be fixed to the first end of the rod by shrink fit or cooling fit, or may be fixed to the first end of the rod by press fitting.

In this structure, it is possible to obtain a bonding strength to a certain extent by using the retainer, and the connection reliability between the valve element unit and the rod is surely improved.

In some embodiments, the retainer is formed by a ring member which is fixed to the first end of the rod, and the rod has a fixing flange part for connecting the valve element unit and the first end of the rod cooperatively with the ring member.

In this structure, the connection reliability of the valve element unit and the rod is surely improved with a simple structure.

In some embodiments, the control valve further comprises a damping depression for damping vibration of the rod cooperatively with a damping flange, and the damping flange is formed by the fixing flange.

In this structure, the damping depression and the damping flange form a damper and the vibration of the rod is damped by the damper. Thus, the impact on the connection part of the valve element unit and the rod is mitigated. As a result, the connection reliability of the valve element unit and the rod is improved.

In some embodiments, the valve block comprises: a valve block body having the containing chamber; and a valve block connection part which is connected to the valve block body, and the valve block body is configured to be fixed via the valve block connection part to a housing which has the cylinder part.

In this structure, the valve block body can be fixed to the housing via the valve block connection part. Thus, the control valve can be fixed to the housing with a simple structure.

In some embodiments, the valve block body has a cylindrical part having a thread groove formed on a part of an outer periphery, and the valve block connection part has a thread hole part to be threadedly engaged with the thread groove of the part of the cylindrical part.

In this structure, the thread groove of the cylindrical part of the valve block body is threadedly engaged with the thread hole part of the valve block connection part. As a result, the valve block connection part and the valve block body can be connected with a simple structure.

In some embodiments, the electromagnet includes a stator and a solenoid, and the control valve further comprises a casing, the casing having a cup part forming with the stator an armature chamber where the armature is arranged and a cylindrical guide part which is arranged in the through hole and in which the rod is slidably inserted.

In this structure, the casing has the guide part, and without depending on dimension accuracy of the valve block, the reciprocating motion of the rod can be guided in a stable manner by the guide part. Therefore, the load impinging on the connection part of the rod to the valve element unit does not become uneven and thus, the connection reliability of the valve element and the rod can be further improved.

In some embodiments, the valve element has an annular shape and includes two concentric sealing lines, and the valve element unit has at least one elastic member which is provided between the rod and the valve element.

In this structure, the rod is connected to the valve element via the elastic member and the impact of the valve element when seating is mitigated by the elastic member. Thus, the impact impinging on the connection part of the valve element unit and the rod is mitigated and the connection reliability of the valve element unit and the rod is further improved.

In some embodiments, the electromagnet includes a stator and a solenoid, and the biasing member is arranged between the stator and the armature.

In this structure, the biasing member can be arranged with a simple structure.

In some embodiments, the valve block further comprises a backpressure adjusting passage extending between the inner passage and the containing chamber.

In this structure, the backpressure inside the containing chamber can be adjusted through the backpressure adjusting passage so that movement of the valve element is not interfered by the pressure (backpressure) in the containing chamber. As a result, it is possible to prevent size increase of the electromagnet and the biasing member.

In some embodiments, the control valve further comprises: an annular part arranged farther from the valve seat than the valve element and arranged to face the valve element; and a rim part extending from an outer edge of the annular part toward the valve seat, the rim part being configured to surround the valve element when the valve member is unseated.

In this structure, by the annular part and the rim part, the valve element unseated from the valve seat is kept from being pushed toward the valve seat by the flow of the working fluid. Thus, the control valve can operate in a stable manner regardless of the pressure or flow rate of the working fluid.

A method according to at least one embodiment of the present invention is for assembling a control valve to be arranged in a periphery of a working chamber formed by a cylinder and a piston to control supply of working fluid to the working chamber or control discharge of the working fluid from the working chamber, and the method comprises:
a valve-block preparation step of preparing a valve block including: a wall where a valve seat is formed; an inner passage for the working fluid with an open end bordered by the valve seat; a containing chamber for housing an armature, a biasing member and an electromagnet; and a through hole which extends between the wall and the containing chamber and into which a rod is inserted;
a valve-element connection step of connecting a valve element unit having at least a valve element to a first end of the rod;
an insertion step of inserting a second end of the rod in the through hole of the valve block after the valve-element connection step; and
an armature connection step of connecting the armature to the second end of the rod after the insertion step.

In the above assembling method of the control valve, the valve-element connection step, the insertion step and the armature connection step are performed sequentially. Thus, the valve element unit can be connected to the rod in an operation-easy environment. This improves connection reliability between the valve element unit and the rod. As a result, the assembled control valve has high reliability.

A power generating apparatus of renewable energy type, according to at least one embodiment of the present invention, for generating electric power from renewable energy, comprises:
a main shaft provided to rotate using the renewable energy;
a hydraulic pump configured to pressurize and discharge working fluid by torque of the main shaft;
a hydraulic motor configured to provide torque using pressure of the working fluid discharged by the hydraulic pump; and
a generator configured to generate power using the torque supplied by the hydraulic motor, and
one of the hydraulic pump or the hydraulic motor is constituted by a radial piston fluid machine, and
the fluid machine comprises: a rotation shaft; a housing having at least one cylinder part extending along a radial direction of the rotational shaft; a piston arranged in the at least one cylinder part and forming a working chamber with the at least one cylinder part; a converting mechanism for performing conversion between rotational motion of the rotation shaft and reciprocating motion of the piston; at least one high pressure valve for controlling flow of high pressure working fluid; and at least one low pressure valve for controlling flow of low pressure working fluid, and
one of the high pressure valve or the low pressure valve is constituted by a control valve, and
the control valve comprises: a valve seat; a rod having a first end and a second end; a valve-element unit which is connected to the first end of the rod and which has a valve element; an armature connected to the second end of the rod; a biasing member for biasing the armature in a biasing direction; an electromagnet configured to attract the armature and drive the armature in a direction opposite to the biasing direction when electric power is supplied; and a valve block including: a wall where the valve seat is formed; an inner passage for the working fluid with an open end bordered by the valve seat; a containing chamber for housing the armature and the electromagnet; and a through hole which extends between the wall and the containing chamber and into which the rod is inserted, and
the second end of the rod is configured to pass through the through hole.

In the control valve of the above power generating apparatus of renewable energy type, the second end of the rod can be passed through the through hole. Further, first the valve element unit is connected to the first end of the rod, the second end of the rod is inserted in the through hole, and then the armature is connected to the second end of the rod. Thus, the valve element unit can be connected to the rod in an operation-easy environment. This improves connection reliability between the valve element unit and the rod. As a result, the control valve attains high reliability and also the reliability of the power generating apparatus of renewable energy type provided with the control valve is improved.

In some embodiments, the control valve forms the low pressure valve of the hydraulic motor.

In the case where the low pressure valve of the hydraulic motor is arranged near the working chamber, it is possible to reduce flow resistance between the low pressure valve and the working chamber. In this case where the low pressure valve 30 is arranged near the working chamber, it is preferable that the connection reliability of the valve element unit to the rod is high to enhance the reliability of the power generating apparatus of renewable energy type. In this aspect, according to this structure, the connection reliability of the valve element unit and the rod in the low pressure valve is high and thus the reliability of the power generating apparatus of renewable energy type can be further improved.

In some embodiments, the above power generating apparatus of renewable energy type further comprises at least one blade configured to rotate the main shaft upon receiving wind as the renewable energy, and the power generating apparatus of renewable energy type is a wind turbine generator.

In this structure, it is possible to enhance the reliability of the wind turbine generator.

### Advantageous Effects

According to at least one embodiment of the present invention, a control valve of high reliability is provided. According to at least one embodiment of the present invention, an assembling method of the control valve of high reliability is provided. According to at least one embodiment of the present invention, a power generating apparatus of renewable energy type equipped with the control valve of high reliability is provided.

### BRIEF DESCRIPTION OF DRAWINGS

[FIG.1] A schematic view of a power generating apparatus of renewable energy type according to some embodiments.
[FIG.2] A schematic transverse sectional view of a radial piston hydraulic machine according to some embodiments.
[FIG.3] A schematic longitudinal sectional view of the radial piston hydraulic machine according to some embodiments.
[FIG.4] A schematic transverse sectional view of the radial piston hydraulic machine taken along line IV-IV of FIG.3.
[FIG.5] A schematic transverse sectional view of the radial piston hydraulic machine taken along line V-V of FIG.3.
[FIG.6] A schematic plain view of a valve block according to some embodiments of the present invention.
[FIG.7] A schematic cross sectional view of a fluid machine according to some embodiments, in the vicinity a connection area between a valve block HP port and a housing HP port, illustrated in a disassembled state.
[FIG.8] A schematic cross sectional view of the fluid machine according to some embodiments, in the vicinity the connection area between the valve block HP port and the housing HP port, illustrated in a disassembled state.
[FIG.9] A schematic cross sectional view of a high pressure valve, a low pressure valve, the valve block and a part of a housing according to some embodiments.
[FIG.10] An expanded cross-sectional view of region X of FIG.9.
[FIG. 11] An expanded cross-sectional view of region XI of FIG.10.
[FIG. 12] A schematic illustration of a valve block body according to some embodiments, illustrated in a cross-sectional view, a side view and a plain view in an upper section, a middle section and a lower section, respectively.
[FIG.13] A schematic cross sectional view of a valve block connection part according to some embodiments.
[FIG.14] A schematic cross sectional view of the high pressure valve, the low pressure valve, the valve block and a part of the housing according to some embodiments.
[FIG.15] A schematic view of the low pressure valve as a control valve in the state where the valve block is removed, illustrated in a side view on the left and a cross-sectional view on the right.
[FIG.16] A schematic plain view of a valve element according to some embodiments.
[FIG.17] A flow chart schematically illustrating an assembling method of the control valve according to some embodiments.
[FIG.18] A schematic perspective view of a rod, the valve element unit and a ring member for forming a retainer, illustrated in a disassembled state.
[FIG.19] An expanded cross-sectional view of region XIX of FIG.9.
[FIG.20] A schematic plain view of the valve block connection part illustrating a structure of a valve-block HP passage according to some embodiments.
[FIG.21] A schematic plain view of the valve block connection part according to some embodiments, in the state where an auxiliary block part and an auxiliary valve are installed, to illustrate a structure of a bypass part.
[FIG.22] A flow chart schematically illustrating a process of starting a hydraulic motor according to some embodiments.
[FIG.23] A schematic perspective view of an interface member according to some embodiments.
[FIG.24] A schematic perspective view of an interface member according to some embodiments.
[FIG.25] A flow chart schematically illustrating a process of the assembling method of the valve cylinder interface according to some embodiments.

### DETAILED DESCRIPTION

Embodiments of the present invention are described in detail with reference to the accompanying drawings. It is intended, however, that unless particularly specified in these embodiments, dimensions, materials, shape, its relative positions and the like shall be interpreted as illustrative only and not limitative of the scope of the present invention.

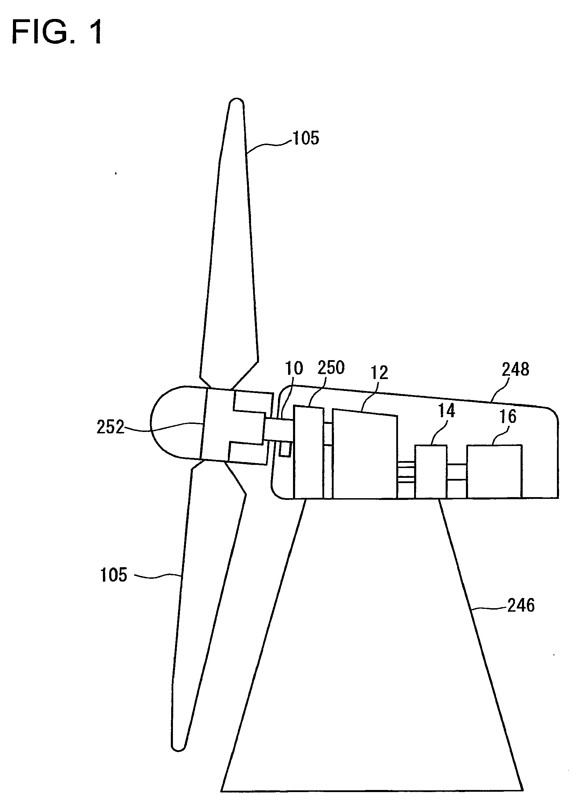

FIG.1 is a schematic view of a power generating apparatus of renewable energy type according to some embodiments.

The power generating apparatus of renewable energy type is configured to generate electric power from renewable energy. The renewable energy is, for instance, constituted by fluid energy such as wind and wave. As illustrated in FIG.1, the power generating apparatus of renewable energy type is provided with a main shaft 10 configured to rotate using the renewable energy; a hydraulic pump 12 configured to pressurize and discharge working fluid by torque of the main shaft 10; a hydraulic motor 14 configured to provide torque using pressure of the working fluid discharged by the hydraulic pump 12; and a generator 16 configured to generate power using the torque applied by the hydraulic motor 14,

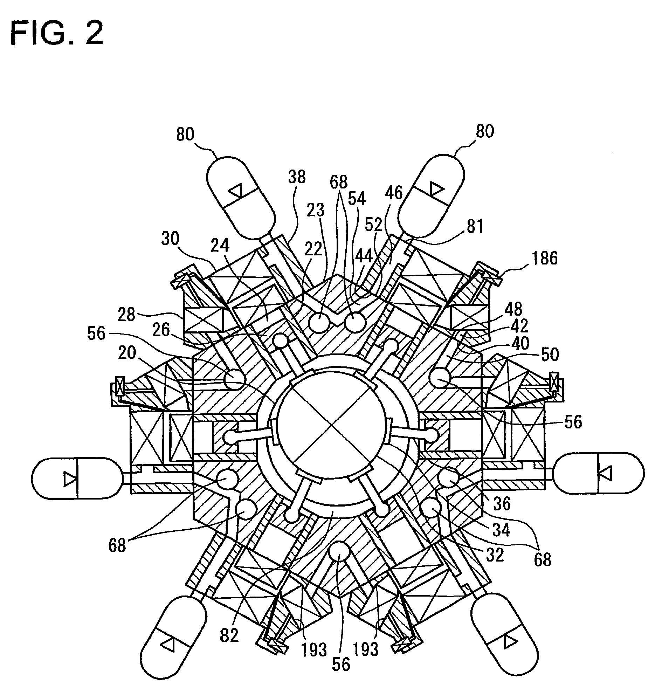

FIG.2 is a schematic transverse sectional view of a radial piston fluid machine which is constituted by one of the hydraulic pump 12 or the hydraulic motor 14. As illustrated in FIG.2, the fluid machine includes a rotation shaft 20, a housing (cylinder block) 23 including at least one cylinder part 22 extending along the radial direction of the rotational shaft 20; a piston 26 arranged in the cylinder part 22 and forming a working chamber 24 with the cylinder part 22; and a converting mechanism for performing conversion between rotational motion of the rotation shaft 20 and reciprocating motion of the piston 26.

Further, the cylinder part 22 is a part which is bordered by a cylinder bore in the housing 23. The housing 23 may be an integrally-formed object having the cylinder part 22, or a collective object including the cylinder part 22 formed by an independent cylinder sleeve (a cylinder liner).

In some embodiments, the fluid machine is provided with a plurality of control valves for controlling flow of working fluid. The control valve includes a high pressure valve 28 for controlling working fluid which is relatively high pressure and a low pressure valve 30 for controlling flow of working fluid which is relatively low pressure.

In the case where the fluid machine is the hydraulic pump 12, when the rotations haft 20 rotates, the piston 26 is caused to reciprocate due to workings of the converting mechanism. Then, during the reciprocating motion of the piston 26, the low-pressure working fluid is supplied to the working chamber 24 through the low pressure valve 30, the working fluid is pressurized in the working chamber 24 and then the high-pressure working chamber is exhausted from the working chamber 24 through the high pressure valve 28. More specifically, in the case where the fluid machine is the hydraulic pump 12, the low pressure valve 30 functions as a supply valve for controlling supply of the working fluid with respect to the working chamber 24 and the high pressure valve 28 functions as an exhaust valve for controlling exhaust of the working fluid from the working chamber 24.

In the case where the fluid machine is the hydraulic motor 14, when the high-pressure working fluid is supplied to the working chamber 24 through the high pressure valve 28, the piston 26 is caused to reciprocate by fluid energy of the working fluid and due to the workings of the converting mechanism, the rotation shaft 20 is rotated. Further, the working fluid whose pressure has dropped in the working chamber 24 is exhausted from the working chamber 24 through the low pressure valve 30. More specifically, in the case where the fluid machine is the hydraulic motor 14, the high pressure valve 28 functions as a supply valve for controlling supply of the working fluid with respect to the working chamber 24 and the low pressure valve 30 functions as an exhaust valve for controlling exhaust of the working fluid from the working chamber 24.

In some embodiments, the converting mechanism, as illustrated in FIG.2, is formed by an eccentric cam 32 which is eccentrically connected to the rotation shaft 20 and is rotatable integrally with the rotation shaft 20, a shoe for slidingly contacting the eccentric cam 32, and a ball joint 36 for joining the shoe 34 and the piston 26.

In some embodiments, the converting mechanism is provided with a lobed cam (a ring cam) which is fixed to the rotation shaft 20 and has a cam face, and a roller provided between the cam face and the piston 26.

In some embodiments, the converting mechanism is formed by a crankpin and a connecting rod.

In some embodiments, the fluid machine is provided with at least one valve block 38 which is fixed to the housing 23. In the valve block 38, at least one high pressure valve 28 and at least one low pressure valve 30 are installed.

In some embodiments, as illustrated in FIG.2, for instance, six cylinder parts 22 are arranged around the rotation shaft 20 and, corresponding to the six cylinder parts 22, six valve blocks 38 are mounted to the housing 23.

Further, in the illustrative embodiment shown in FIG.2, six valve blocks 38 each having the high pressure valve 28 and the low pressure valve 30 are attached to the housing 23 so that HP valve regions of adjacent two of the valve blocks 38 are arranged opposite to each other. The HP valve region is a region of the valve block 38, where the high pressure valve 28 is provided. This makes it easier to adopt the structure, which is described later, in which a high-pressure axial passage (HP axial passage) 56 or a low-pressure axial passage (LP axial passage) 68 corresponding to adjacent two of the cylinder parts 22 is arranged between these adjacent two of the cylinder parts 22.

The valve block 38 includes: a valve-block high-pressure port (valve-block HP port) 40; a valve-block high-pressure passage (valve-block HP passage) 42 extending inside the valve block 38 to fluidically connect the valve-block HP port 40 and the working chamber 24 via the high pressure valve 28; a valve-block low-pressure port (valve-block LP port) 44; and a valve-block low-pressure passage (valve-block LP passage) 46 extending inside the valve block 38 to fluidically connect the valve-block LP port 44 and the working chamber 24 via the low pressure valve 30.

In some embodiments, the housing 23 includes: a housing high-pressure port (housing HP port) 48 which is connected to the valve-block HP port 40; a housing high-pressure passage (housing HP passage) 50 extending inside the housing 23 from the housing HP port 48; a housing low-pressure port (housing LP port) 52 which is connected to the valve-block LP port 44; and a housing low-pressure passage (housing LP passage) 54 extending inside the housing 23 from the housing LP port 52.

In the above fluid machine, the housing 23 includes the housing HP passage 50 which is connected to the valve-block HP passage 42 and the housing LP passage 54 which is connected to the valve-block LP passage 46. Thus, it is possible to reduce the number of external pipes that are arranged in a region outside the housing 23 and the valve block 38. As a result, it is possible to reduce the size of the fluid machine in the radial direction of the rotation shaft 20.

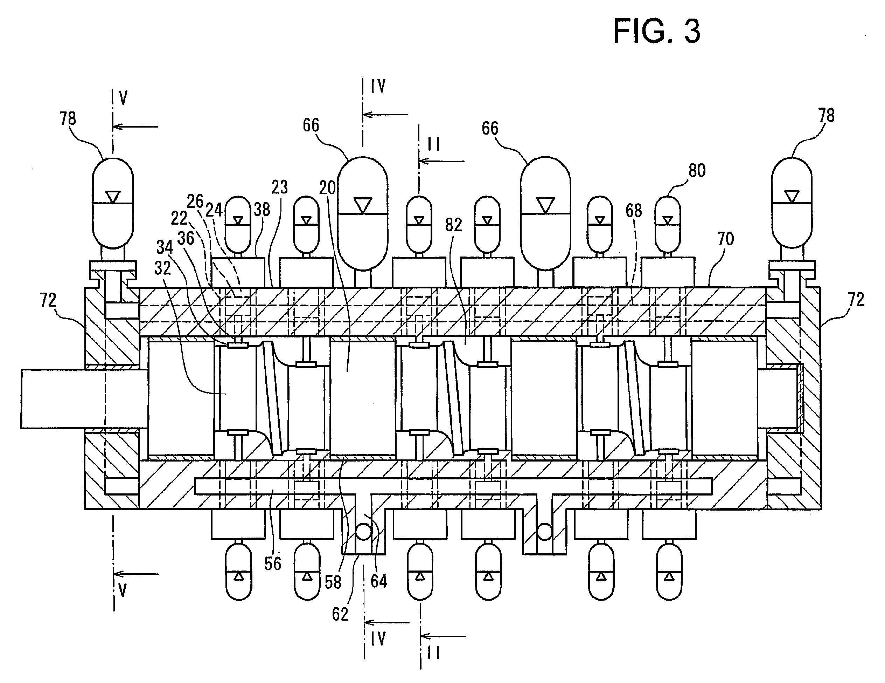

FIG.3 is a schematic longitudinal sectional view of the radial piston fluid machine according to some embodiments. In some embodiments, as illustrated in FIG.3, a plurality of the cylinder parts 22 is arranged along the axial direction of the rotation shaft 20.

In the fluid machine according to some embodiments, a plurality of the cylinder parts 22 is arranged along the circumferential direction and the axial direction of the rotation shaft 20. For instance, as illustrated in FIG.2, six cylinder parts 22 are arranged along the circumferential direction of the rotation shaft 20 to form an annular cylinder array, and as illustrated in FIG.3, six rows of annular cylinder arrays are arranged along the axial direction of the rotation shaft 20.

In some embodiments, as illustrated in FIG.3, the housing HP passage 50 includes the HP axial passage 56 extending in the housing 23 along the axial direction of the rotation shaft 20.

According to this structure, the housing HP passage 50 includes the HP axial passage 56 extending in the housing 23 along the axial direction of the rotation shaft 20. Thus, in the case where a plurality of the working chambers 24 is arranged along the rotation shaft 20, the working chambers 24 can be connected to one housing HP passage 50. Further, in the case where the pistons 26 of the plurality of the working chambers 24 arranged along the axial direction of the rotation shaft 20 have different phases, it is possible to suppress pressure fluctuation (pulsation) in the one housing HP passage 50.

In some embodiments, for adjacent two of the cylinder parts 22 that are arranged next to each other in the circumferential direction of the rotation shaft 20, one HP axial passage 56 is provided in the housing 23 (at a position between the adjacent two cylinder parts 22). Further, each of the HP axial passages 56 is arranged along the axial direction of the rotation shaft 20 and is in communication with two rows of the working chambers 24 that are located on both sides of the HP axial passage 56. Therefore, it is possible to further suppress pressure fluctuation (pulsation) of the working fluid in each of the housing HP passages 50.

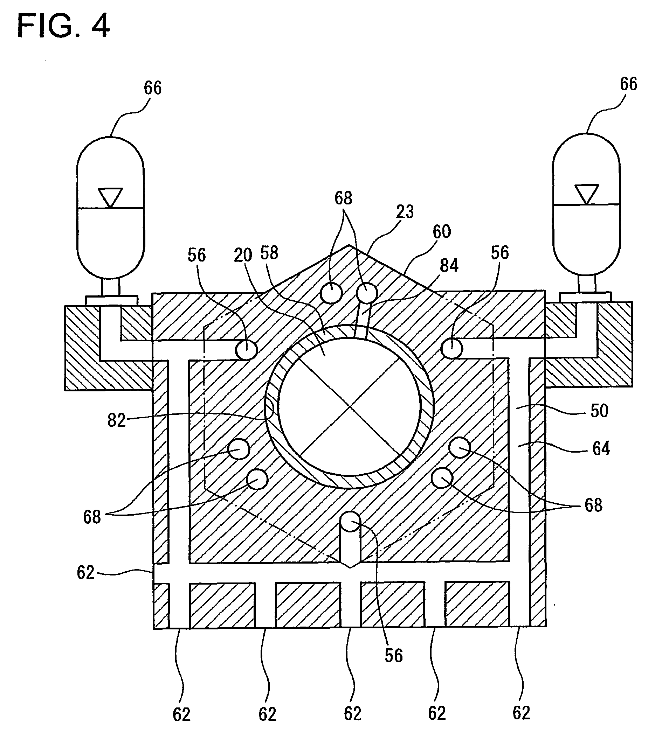

FIG.4 is a schematic transverse sectional view of the fluid machine according to some embodiments along line IV-IV of FIG.3.

In some embodiments, the housing 23 of the fluid machine is provided with a support block part 60 for supporting the rotation shaft 20 rotatably via a bearing 58 as illustrated in FIG.4. In the support block part 60, at least one high-pressure external port (HP external port) 62, and a support-block high-pressure passage (support-block HP passage) 64 for communication between the HP external port 62 and the HP axial passage 56 are formed. The support block HP passage 64 constitutes a part of the housing HP passage 50 and external pipes are connected to the HP external port 62. Therefore, via the HP external port 62, supply of the high-pressure working fluid to the fluid machine or discharge of the high-pressure working fluid from the fluid machine can be performed.

In some embodiments, with respect to six rows of annular cylinder arrays that are arranged along the axial direction of the rotation shaft 20, two support block parts 60 are provided to separate the annular cylinder arrays by two rows. These two support block parts 60 are penetrated by three HP axial passages 56. In each of the support block parts 60, six HP external ports 62 are formed to communicate with these three HP axial passages 56. According to this structure, the fluid machine is configured to include twelve HP external ports 62 in total.

In some embodiments, the fluid machine is provided with a high-pressure accumulator which is connected to at least one of the housing HP passage 50 or the valve-block HP passage 42. The high-pressure accumulator is configured to suppress pressure fluctuation (pulsation) of the working fluid.

According to this structure, pressure fluctuation (pulsation) of the working fluid is suppressed by the high-pressure accumulator and thus, stable operation of the fluid machine can be achieved.

In some embodiments, the fluid machine includes, as the high-pressure accumulator, a high-pressure accumulator (HP accumulator) 66 which is connected to the support block HP passage 64 constituting a part of the housing HP passage 50 as illustrated in FIG.3 and FIG.4.

In some embodiments, the housing LP passage 54 includes a low-pressure axial passage (LP axial passage) 68 extending inside the housing 23 along the axial direction of the rotation shaft 20.

In this structure, the housing LP passage 54 includes the LP axial passage 68 extending in the housing 23 along the axial direction of the rotation shaft 20. Thus, in the case where a plurality of the working chambers 24 is arranged along the axial direction of the rotation shaft 20, the working chambers 24 can be connected to one housing LP passage 50. Further, in the case where the pistons 26 of the plurality of the working chambers 24 arranged along the axial direction of the rotation shaft 20 have different phases, it is possible to suppress pressure fluctuation (pulsation) in the one housing LP passage 54.

Further, in the illustrative example shown in FIG.2, for adjacent two of the cylinder parts 22 that are arranged next to each other in the circumferential direction of the rotation shaft 20, at least one LP axial passage 68 (two passages in FIG.2) is provided in the housing 23 (at a position between the adjacent two cylinder parts 22).

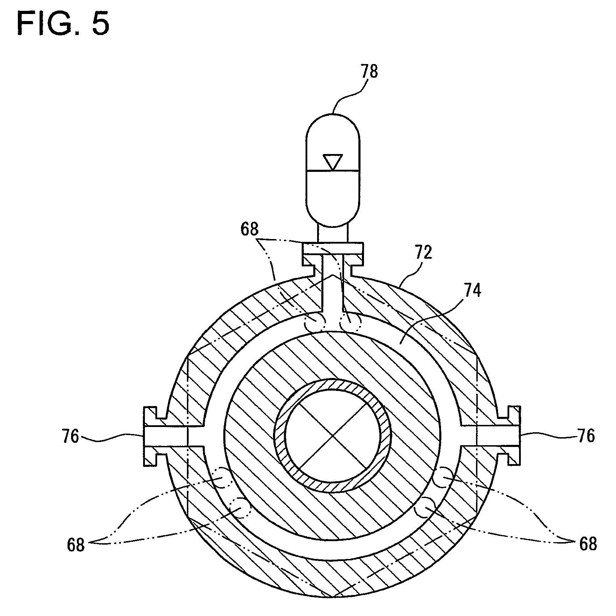

FIG.5 is a schematic transverse sectional view of the fluid machine taken along line V-V of FIG.3, according to some embodiments. In some embodiments, the housing 23 of the fluid machine has a cylindrical part 70 arranged coaxially with the rotation shaft 20 as illustrated in FIG.2 and FIG.3 and also has end wall parts 72 for closing both ends of the cylindrical part 70 as illustrated in FIG.5.

In some embodiments, in the end wall part 72, an annular groove 74 constituting a part of the housing LP passage 54 is formed in a region where the end wall part 72 contacts the cylindrical part 70. Further, the LP axial passage 68 penetrating the cylindrical part 70 communicates with the annular groove 74. Furthermore, in the end wall part 72, a low-pressure external port (LP external port) 76 communicating with the annular groove 74 is formed. To the LP external port 76, external pipes are connected so that supply of the low-pressure working fluid to the fluid machine or discharge of the low -pressure working fluid from the fluid machine can be performed via the LP external port 76.

In some embodiments, in each of the end wall parts 72, two LP external ports 76 are formed and the fluid machine has four LP external ports 76 in total.

In some embodiments, with respect to six cylinder parts 22 arranged in the circumferential direction of the rotation shaft 20, six LP axial passages 68 are formed in the housing 23 and both ends of these six LP axial passages 68 are respectively connected to the two annular grooves 74.

In some embodiments, the fluid machine is further provided with a low-pressure accumulator (LP accumulator) which is connected to one of the housing LP passage 54 or the valve-block LP passage 46 to suppress pressure fluctuation of the working fluid.

In this structure, pressure fluctuation (pulsation) of the working fluid is suppressed by the low-pressure accumulator and thus, stable operation of the fluid machine can be achieved.

In some embodiments, the fluid machine includes a first LP accumulator 78 which is attached to the end wall part 72 of the housing 23 and which communicates with the annular groove 74 constituting a part of the housing LP passage 54.

Further, in some embodiments, the fluid machine includes a second LP accumulator 80 which is attached to the valve block 38 and which communicates with the valve-block LP passage 46. Thus, the valve block 38 includes a low-pressure accumulator port 81 (LP accumulator port) 81 for attaching the second LP accumulator 80.

In some embodiments, the housing 23 includes a crank case 82 for housing the converting mechanism, and the fluid machine is further provided with an equalizing path for connection between one of the housing LP passage 54 or the valve-block LP passage 46 and a crank case 82.

In this structure, it is possible to prevent accumulation of the high pressure working fluid in the crank case 82 and also to achieve smooth rotational motion and reciprocating motion of the rotation shaft 20 and the piston 26, respectively. As a result, the fluid machine can operate efficiently.

In some embodiments, as illustrated in FIG.4, an equalizing path 84 is formed in the support block part 60 of the housing 23, for communication between the LP axial passage 68 and the crank case 82.

In some embodiments, the fluid machine is constituted by the hydraulic motor 14 and is configured to supply the HP working fluid to the working chamber 24 through the housing HP passage 50 and the valve-block HP passage 42 and discharge the LP working fluid through the housing LP passage 54 and the valve-block LP passage 46 by rotating the rotation shaft 20 using energy of the HP working fluid.

In this structure, the fluid machine is the hydraulic motor 14 configured to rotate the rotation shaft 20 using the energy of the HP working fluid. If one or both of the high pressure valve 28 and the low pressure valve 30 of the hydraulic motor 14 is formed by an electromagnetic valve of large size, it is possible to reduce the overall size of the hydraulic motor 14 in the radial direction by reducing the external pipings.

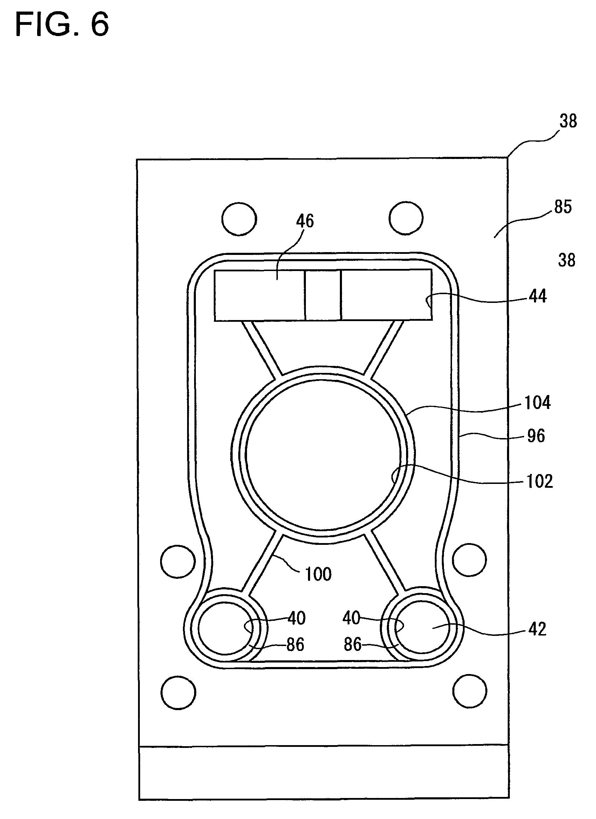

FIG.6 is a schematic plain view of the valve block 38 of the fluid machine according to some embodiments of the present invention. FIG.6 illustrates a face 85 of the valve block 38 (attaching face), which is opposite to the housing 23.

In some embodiments, the fluid machine is further provided with a high-pressure seal member (HP seal member) which is arranged around the valve-block HP port 40 or the housing HP port 48.

In this structure, the HP seal member is used to seal around the valve-block HP port 40 or the housing HP port 48 and thus, with the simple structure, it is possible to prevent the HP working fluid from leaking.
In some embodiments, the fluid machine is further provided with a high-pressure seal member (HP seal member) 86 which is arranged around the valve-block HP port 40 as illustrated in FIG.6.

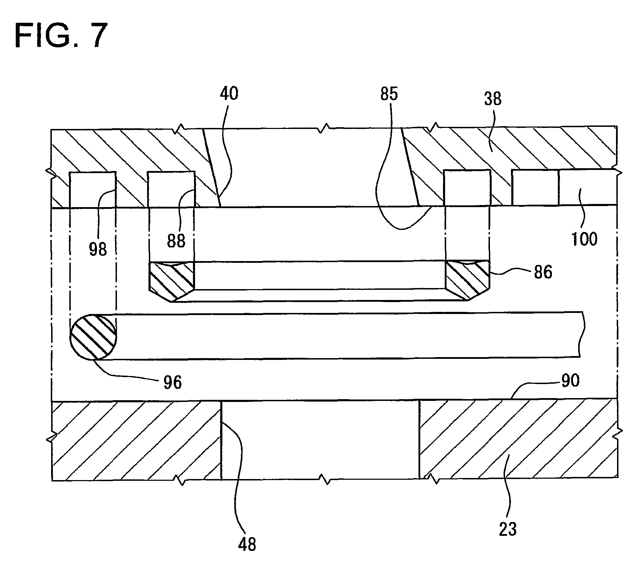

FIG.7 is a schematic cross-sectional view of a fluid machine according to some embodiments, in the vicinity a connection area between the valve-block HP port 40 and the housing HP port 48, illustrated in a disassembled state. In some embodiments, an annular seal groove 88 is formed in the valve block 38, surrounding the valve-block HP port 40. The seal groove 88 opens at the attaching face 85. In the seal groove 88, the annular HP seal member 86 is arranged. The HP seal member 86 contacts a face (mounting face) 90 of the housing 23, which is opposite to the attaching face 85, thereby sealing the gap between the attaching face 85 and the mounting face 90.

In this structure, the seal groove 88 is formed in the valve block 38. This makes it easier to form the seal groove 88.

In some embodiments, the HP seal member is made of plastic or soft metal, and the HP seal member 86 of FIG.7 is made of fluroresin such as polytetrafluoroethylene.

Further, in some embodiments, the HP seal member cross-sectionally has a shape other than a circular shape, and the HP seal member 86 illustrated in FIG.7 has an approximately hexagonal shape in cross-section with one concave vertex.

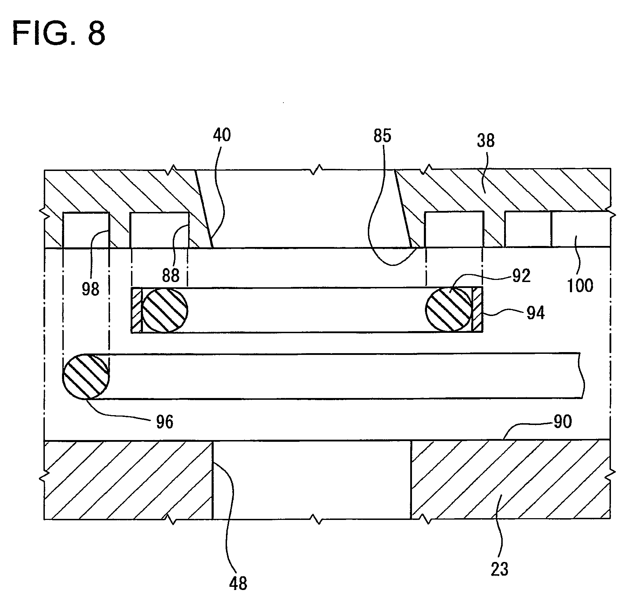

FIG.8 is a schematic cross sectional view of the fluid machine according to some embodiments, in the vicinity the connection area between the valve block HP port 40 and the housing HP port 48 illustrated in a disassembled state. In some embodiments, an annular HP seal member 92 made of rubber, and an annular backup ring 94 made of plastic or the like for suppressing deformation of the HP seal member 92 are arranged in the seal groove 88. The HP seal member 92 has a circular shape in cross-section and the backup ring 94 has a rectangular shape in cross-section.

Similarly to the previous structure, the HP seal member 92 contacts the mounting face 90 of the housing 23 opposite to the attaching face 85, thereby sealing the gap between the attaching face 85 and the mounting face 90. In this structure, however, deformation of the HP seal member 92 expanding radially by the pressure of the working fluid is prevented by the backup ring 94. Thus, the sealing performance of the HP seal member 92 is secured.

In some embodiments, the fluid machine is further provided with a LP seal member surrounding one of the valve-block LP port 44 or the housing LP port 52 and the HP seal member 86.

In this structure, the periphery of one of the valve-block LP port 44 or the housing LP port 52 and the HP seal member 86 is sealed by the LP seal member. Thus, with this simple structure, the LP working fluid is prevented from leaking.

In some embodiments, as illustrated in FIG.6, the LP seal member 96 is provided to surround the valve-block LP port 44 and the HP seal member 86. The LP seal member 96 is, for instance, made of rubber and has a circular shape in cross-section as illustrated in FIG.7 or FIG.8. An annular seal groove 98 for housing the LP seal member 96 is formed in the valve block 38 and opens at the attaching face 85.

In this structure, the seal groove 98 is formed in the valve block 38. This makes it easier to form the seal groove 98.

In some embodiments, a drain passage is formed in one of the valve block or the housing 23. The drain passage extends between one of the valve-block LP port 44 or the housing LP port 52 and a region outside the HP seal member.

In this structure, the working fluid having leaked from the HP seal member is introduced to the valve-block LP port 44 or the housing LP port 52 through the drain passage and thus, it is possible to prevent the pressure in the region outside the HP seal member from becoming high.

In some embodiments, as illustrated in FIG.6, FIG.7 and FIG.8, a drain groove 100 which constitutes the drain passage is formed in the valve block 38. The drain groove 100 opens at the attaching face 85.

In this structure, the drain groove 100 is formed in the valve block 38. This makes it easier to form the drain groove 100.

In some embodiments, as illustrated in FIG.6, the valve block 38 has a main port 102 which is connected to the cylinder part 22. The main port 102 opens at the attaching face 85 in a region that is surrounded by the LP seal member 96. Further, around the main port 102, an annular groove 104 is formed which opens at the attaching face 85. The annular groove 104 constitutes a part of the drain groove 100 and the working fluid having leaked from the cylinder part 22 is introduced to the valve-block LP port 44 through the drain groove 100. Thus, it is possible to prevent the pressure in the region outside the main port 102 from becoming high.

In some embodiments, the LP seal member 96 extends approximately along an outer edge of the attaching face 85 of the valve block 38. Thus, the working fluid is firmly prevented from leaking from between the attaching face 85 of the valve block 38 and the mounting face 90 of the housing 23.

In some embodiments, as illustrated in FIG.2, a plurality of the cylinder parts 22 is arranged in the circumferential direction of the rotation shaft 20, and corresponding to the plurality of the cylinder parts 22, a plurality of the valve blocks 38 is fixed to the housing 23.

In this structure, the valve blocks 38 are provided corresponding to the cylinder parts 22 and thus, it is possible to prevent size increase of the valve block 38.

In some embodiments, one or both of the HP valve 28 and the LP valve 30 is configured removable3 from the valve block 38 without detaching the valve block 38 from the housing 23.

In this structure, without detaching the valve block 38 from the housing 23, one or both of the HP valve 28 and the LP valve 30 can be removed. This facilitates maintenance of the HP valve 28 or the LP valve 30.

In some embodiments, the power generating apparatus of renewable energy type is a wind turbine generator further provided with at least one blade 105 configured to rotate the main shaft 10 upon receiving wind as the renewable energy, as illustrated in FIG.1. This wind turbine generator is provided with a radial piston type fluid machine which can be reduced in size in the radial direction of the rotation shaft 20 and thus it is possible to reduce the size of the wind turbine generator.

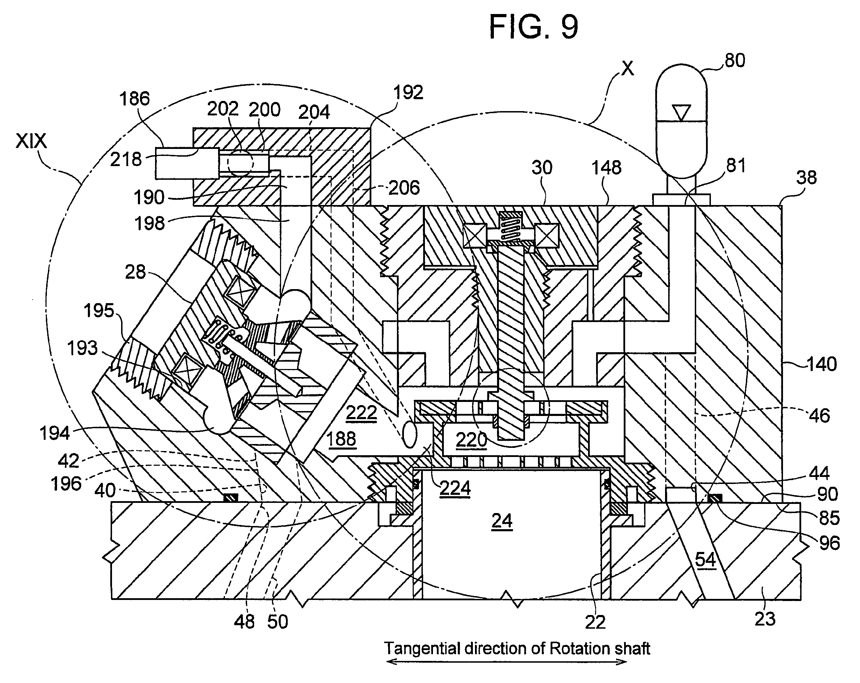

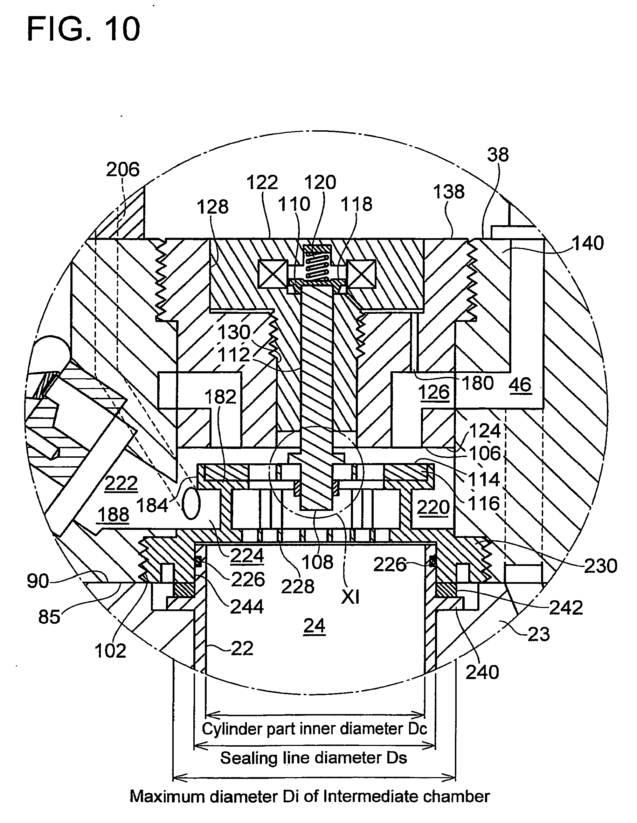

FIG.9 is a schematic cross sectional view of the HP valve 28, the LP valve 30, the valve block 38 and a part of the housing 23 according to some embodiments. FIG.10 is an expanded cross-sectional view of region X of FIG.9.

As illustrated in FIG.9, the HP valve 28 and the LP valve 30 are arranged in the periphery of the working chamber 24. The HP valve 28 and the LP valve 30 are control valves for controlling supply of the working fluid to the working chamber 24 or discharge of the working fluid fro the working chamber 24. Further, in FIG.9, both the HP valve 28 and the LP valve 20 are opened. However, when actually used, the HP valve 28 and the LP valve 30 are alternately opened.

In some embodiments, the LP valve 30 as the control valve is provided with: a valve seat 106; a rod 112 having a first end 108 and a second end 110; a valve element unit 116 having at least a valve element 114; an armature 118 connected to the second end 110 of the rod 112; a biasing member 120 for biasing the armature 118 in the biasing direction; an electromagnet 122 configured to attract the armature 118 to actuate the armature in the direction opposite to the biasing direction when supplied with electric power; and the valve block 38. More specifically, the LP valve is provided integrally with the valve block 38. The valve block 38 has a wall 124 where the valve seat 106 is formed, an inner passage 126 for the working fluid with an open end bordered by the valve element 106, a containing chamber 128 for housing the armature 118 and the electromagnet 122, and a through-hole 130 which extends between the wall 124 and the containing chamber 128 and in which the rod 112 is inserted through. The second end 110 of the rod 112 can be passed through the through-hole 130.

In the above LP valve 30, the second end of the rod 112 can be passed through the through-hole 130 of the valve block 38. The valve element unit 116 is connected to the first end 108 of the rod 112, the second end 110 of the rod 112 is inserted in the through-hole 130, and then the armature 118 is connected to the second end 110 of the rod 112. Thus, the valve element unit 116 can be connected to the rod 112 in an operation-easy environment. This improves connection reliability between the valve element unit 116 and the rod 112. As a result, the LP valve 30 attains high reliability.

In some embodiments, the HP valve 28 has the same structure as the LP valve 30 and attains high reliability.

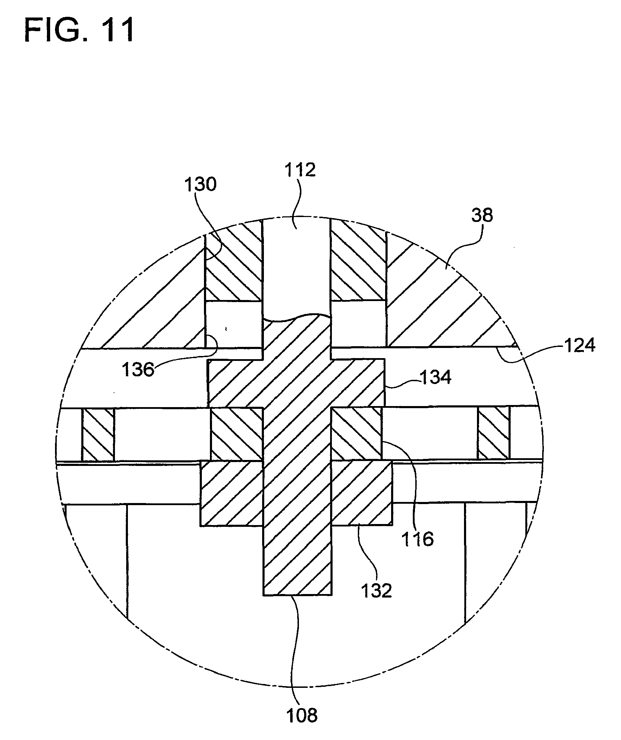

FIG.11 is an expanded cross-sectional view of region XI of FIG.10. In some embodiments, as illustrated in FIG.11, the valve element unit 116 is connected by a retainer 132 which fixed to the first end 108 of the rod 112. Further, the retainer 132 may be fixed to the first end 108 of the rod 112 by interference fit. For instance, the retainer 132 may be fixed to the first end 108 of the rod 112 by shrink fit or cooling fit. Alternatively, the retainer 132 may be fixed to the first end 108 of the rod 112 by press fitting.

In this structure, the valve element unit 116 is connected to the rod 112 by the retainer 132. As a result, it is possible to obtain a bonding strength to a certain extent with use of the retainer 132, and the connection reliability between the valve element unit 116 and the rod 112 is surely improved.

In some embodiments, the retainer 132 is formed by a ring member which is fixed to the first end 108 of the rod 112. The rod 112 has a flange part 134 for fixing the valve element. The flange part 134 is configured to couple the valve element unit 116 and the first end 108 of the rod 112 in cooperation with the ring member.

In this structure, the connection reliability of the valve element unit 116 and the rod 112 is surely improved with a simple structure.

In some embodiments, the LP valve 30 is further provided with a damping depression 136 for damping the vibration of the rod 112 together with a damping flange. The damping flange is constituted by the flange part 134 for fixing the valve element.

In this structure, the damping depression 136 and the damping flange form a damper and the vibration of the rod 112 is damped by the damper. Thus, the impact on the connection part of the valve element unit 116 and the rod 112 is mitigated. As a result, the connection reliability of the valve element unit 116 and the rod 112 is further improved.

In some embodiments, the valve block 38 includes a valve block body 138 having the containing chamber 128, and a valve block connection part 140 coupled to the valve block body 138 as illustrated in FIG.9. The valve block body 138 is configured to be fixed via the valve block connection part 140 to the housing 23 provided with the cylinder part 22. For instance, the valve block connection part 140 is fixed to the housing with bolts not shown in the drawing.

In this structure, the valve block body 138 can be fixed to the housing 23 via the valve block connection part 140. Thus, the control valve can be fixed to the housing 23 with a simple structure.

Further, in this structure, the valve block body 138 and the valve block connection part 140 are separate members. This facilitates hardening treatment of the wall 124 where the valve seat 106 is formed. The hardening treatment includes carburizing, etc.

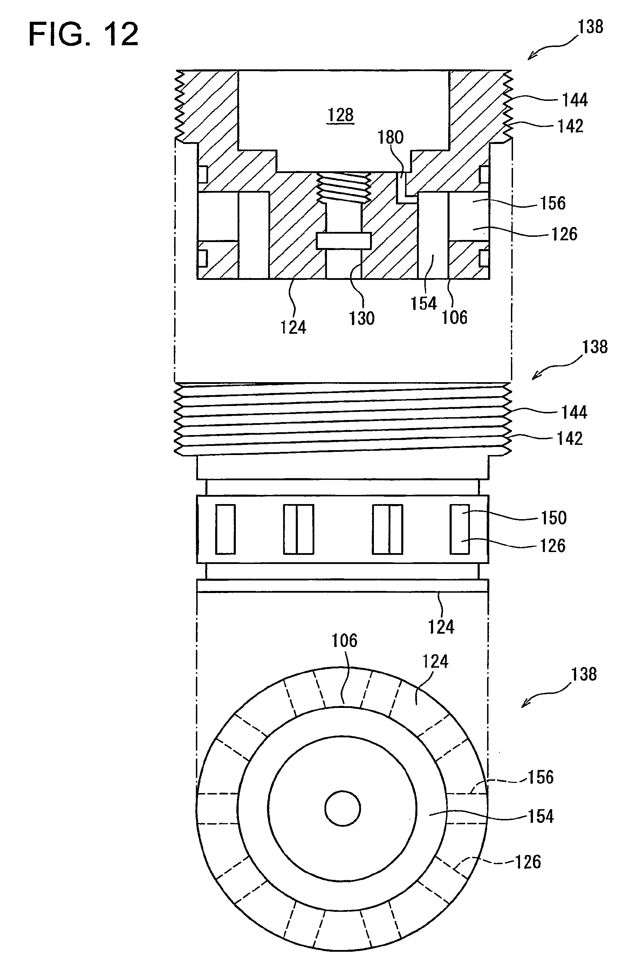

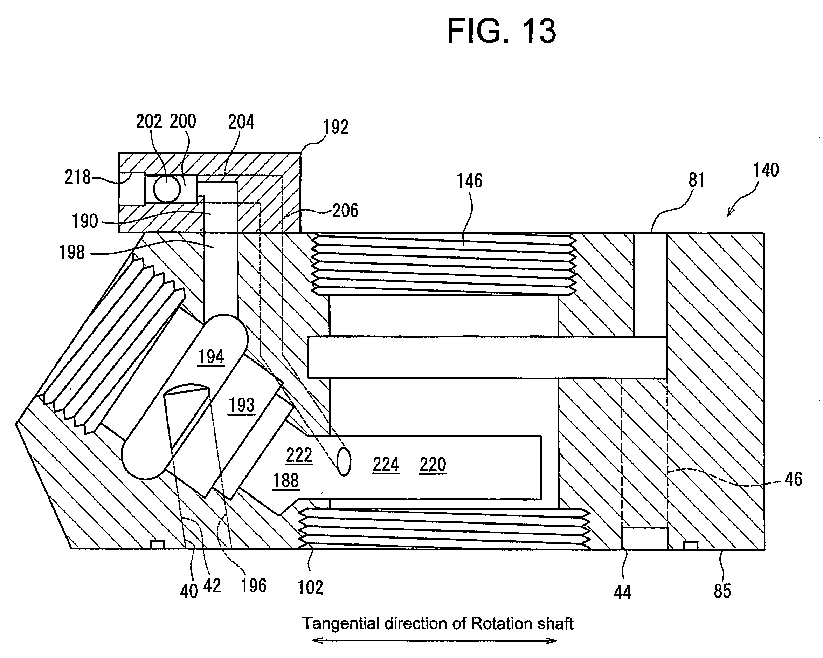

FIG.12 is a schematic illustration of the valve block body 138 according to some embodiments, illustrated in a cross-sectional view, a side view and a plain view in an upper section, a middle section and a lower section, respectively. FIG.13 is a schematic cross sectional view of the valve block connection part 140 according to some embodiments. In some embodiments, the valve block body 138 has a cylindrical part 144 having a thread groove 142 formed on a part of the outer periphery as illustrated in FIG. 12, and the valve block connection part 140 has a thread hole part 146 to be threadedly engaged with the thread groove 142 of the part of the cylindrical part 144.

In this structure, the thread groove 142 of the part of the cylindrical part 144 of the valve block body 138 is threadedly engaged with the thread hole part 146 of the valve block connection part 140. As a result, the valve block connection part 140 and the valve block body 138 can be connected with a simple structure.

Further, in this structure, without detaching the valve block connection part 140 from the housing 23, the LP valve 30 can be removed with the valve block body 138 from the housing 23 and the valve block connection part 140.

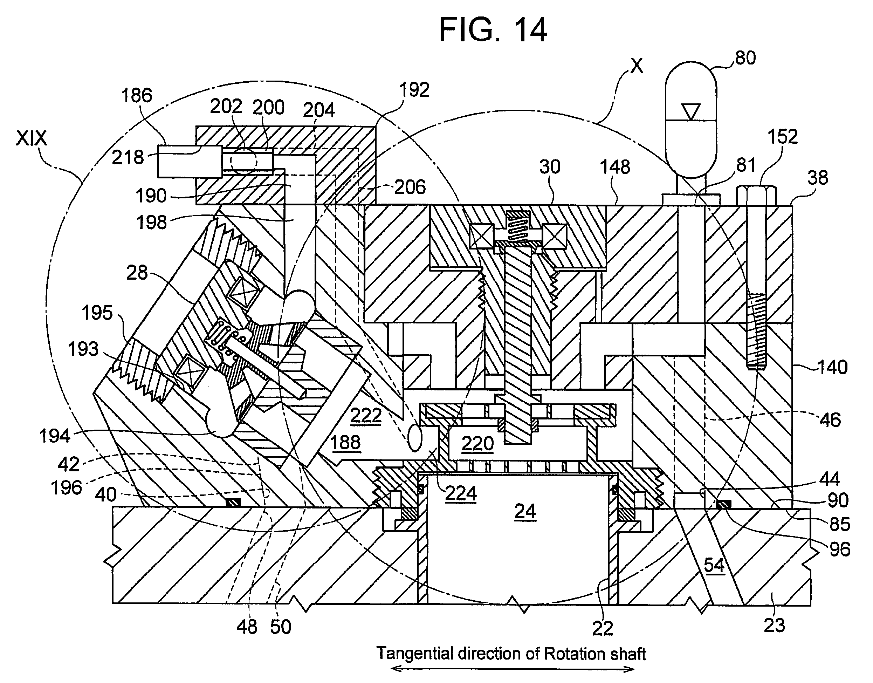

FIG.14 is a schematic cross sectional view of the HP valve 28, the LP valve 30, the valve block 38 and a part of the housing 23 according to some embodiments. The valve block 23 has a valve block body 148 and a valve block connection part 150. The valve block body 148 is fixed to the valve block connection part 150 with a bolt 152.

In this structure, the valve block connection part 150 and the valve block body 148 can be connected with a simple structure.

Further, in this structure, without detaching the valve block connection part 150 from the housing 23, the LP valve 30 can be removed with the valve block body 148 from the housing 23 and the valve block connection part 150.

In some embodiments, as illustrated in FIG.12, the valve block body 138 has a tubular passage 154 of a cylindrical shape 154 and a plurality of radial passages 156, as the inner passage 126. The tubular passage 154 has an open end opening at the wall 124 and is arranged coaxially with the through-hole 130. The radial passages 156 are arranged radially around the tubular passage 154. Further, each of the radial passages 156 extends to an outer surface of the valve block body 138 from an opposite end of the tubular passage from the open end along the radial direction of the tubular passage 154.

According to this structure, it is possible to increase a cross-sectional passage area of the inner passage 126. Further, the inner passage 126 constitutes a part of the valve-block LP passage 46 and with this structure, it is possible to increase a cross-sectional passage area of the valve-block LP passage 46.

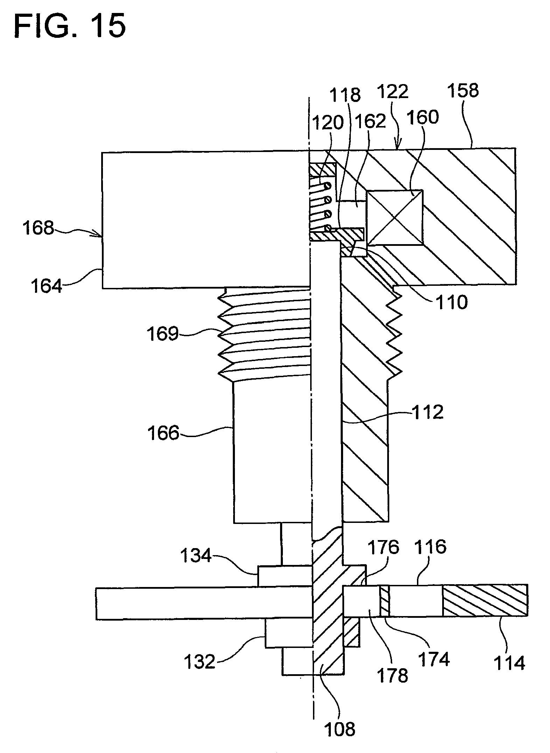

FIG.15 is a schematic view of the LP valve 30 as the control valve in the state where the valve block 38 is removed, illustrated in a side view on the left and a cross-sectional view on the right. In some embodiments, as illustrated in FIG.15, the electromagnet 122 includes a stator 158 and a solenoid 160, and the LP valve 30 is further provided with a casing 168. The casing 168 includes a cup part 164 and a casing 168. The cup part 164 forms an armature room 162 with the stator 158 and the armature 118 is arranged in the armature room 162. The casing 168 has a cylindrical guide part 166 arranged in the through-hole 130, and the rod 112 is slidably inserted in the cylindrical guide part 166.

In this structure, the casing 168 has the guide part 166, and without depending on dimension accuracy of the valve block 38, the reciprocating motion of the rod 112 can be guided in a stable manner by the guide part 166. Therefore, the load impinging on the connection part of the rod 112 to the valve element unit 116 does not become uneven and thus, the connection reliability of the valve element unit 116 and the rod 112 can be further improved.

In some embodiments, a threaded part 169 is formed on a part of the outer periphery of the guide part 166, and by engaging the threaded part 169 with the thread hole part formed in a part of the through-hole 130, the casing 168 can be fixed to the valve block body 138.

According to this structure, it is possible to fix the casing 168 to the valve block body 138 easily.

In some embodiments, an end of the guide part 166 which corresponds to the first end 108 of the rod 112 is arranged inside the through hole 130. By a part of the through hole 130 and the end of the guide part 166, the damping depression 136 is formed. According to this structure, it is possible to form the damping depression 136 with a simple structure.

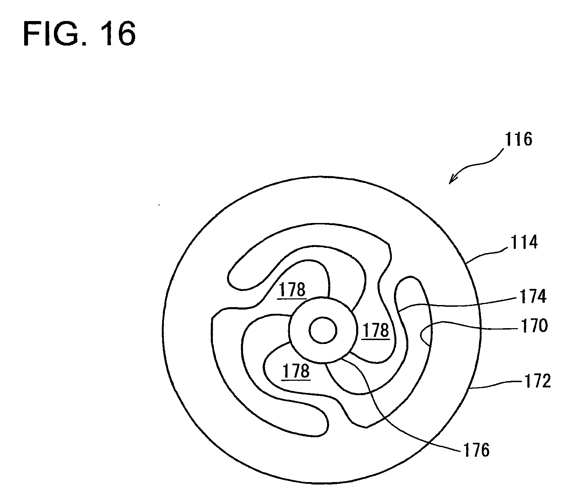

FIG.16 is a schematic plain view of the valve element unit 116 according to some embodiments. In some embodiments, the valve unit 114 has an annular shape and also has two coaxial sealing lines 170, 172. Further, the valve element unit 116 has at least one elastic member 174 provided between the rod 112 and the valve element 114. The sealing line 170 is formed by an inner edge of the valve element 114 and the sealing line 172 is formed by an outer edge of the valve element 114.

In some embodiments, the valve seat 106 has an inner edge part and an outer edge part corresponding to the sealing lines 170, 172.

In this structure, the rod 112 is connected to the valve element 114 via the elastic member 174 and the impact of the valve element 114 when seating is mitigated by the elastic member 174. Thus, the impact impinging on the connection part of the valve element unit 116 and the rod 112 is mitigated and the connection reliability of the valve element unit 116 and the rod 112 is further improved.

In some embodiments, the valve element unit 116 has a boss 176 to be fitted to the first end 108 of the rod 112. The boss 176 and the valve element 114 are connected by the elastic member having a shape of three rims. Further, the valve element 114, the elastic member 174 and the boss 176 are integrally formed.

In this structure, the valve element unit 116 has an opening 178 formed between the valve element 114 and the elastic member 174 so that the working fluid can flow through the opening 178 inside the valve element unit 116 in addition to the region outside the valve element 114.

In some embodiments, the elastic member 174 is formed by a plate spring having deformed-S shape, an annular shape or an arc shape.

In some embodiments, the electromagnet 122 includes the stator 158 and the solenoid 160, and as illustrated in FIG.15, the biasing member 120 is arranged between the stator 158 and the armature 118.

In this structure, the biasing member can be arranged with a simple structure.

In some embodiments, the biasing member 120 is a compression coil spring.

In some embodiments, the valve block 38 is further provided with a backpressure adjusting passage 180 extending between the inner passage 126 and the containing chamber 128, as illustrated in FIG.10.

In this structure, the backpressure inside the containing chamber 128 can be adjusted through the backpressure adjusting passage 180 so that movement of the valve element 114 is not interfered by the pressure (backpressure) in the containing chamber 128. As a result, it is possible to prevent size increase of the electromagnet 122 and the biasing member 120.

In some embodiments, the LP valve 30 as the control valve has, as illustrated in FIG.10, an annular part 182 and a rim part 184. The annular part 182 is arranged farther from the valve seat 106 than the valve element 114 in the moving direction of the valve element 114 and is arranged opposing the valve element 114. The rim part 184 extends from the outer edge of the annular part 182 toward the valve seat 106 along the moving direction of the valve element 114 and is configured to surround the valve element 114 when the valve element 114 is unseated from the valve seat 106.

In this structure, the annular part 182 and the rim part 184 constitutes a barrier and by the annular part 182 and the rim part 184, the valve element 114 unseated from the valve seat 106 is kept from being pushed toward the valve seat 106 by the flow of the working fluid. Thus, the LP valve 30 can operate in a stable manner regardless of the pressure or flow rate of the working fluid.

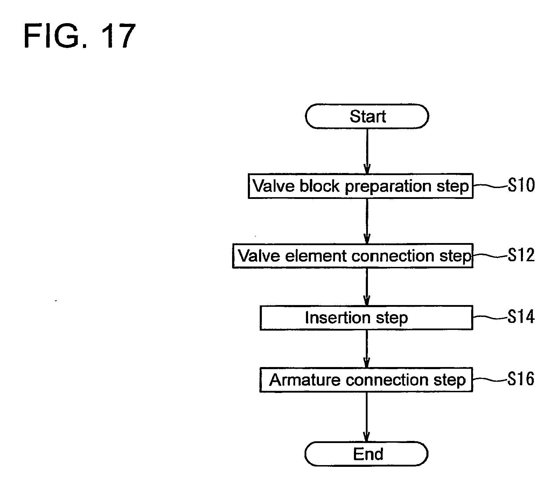

FIG.17 is a flow chart schematically illustrating an assembling method of the control valve according to some embodiments. The control valve is arranged in the periphery of the working chamber formed by the cylinder part 22 and the piston 26 and is configured to control supply of the working fluid to the working chamber 24 or discharge of the working fluid from the working chamber 24.

The assembling method of the LP valve 30 as the control valve has a valve-block preparation step S10, a valve-element connection step S12, an insertion step S14 and an armature connection step S16.

In the valve-block preparation step S10, the valve block 38 is prepared. In the valve-block preparation step S10, the valve block 38 may be manufactured or purchased from an outside facility.

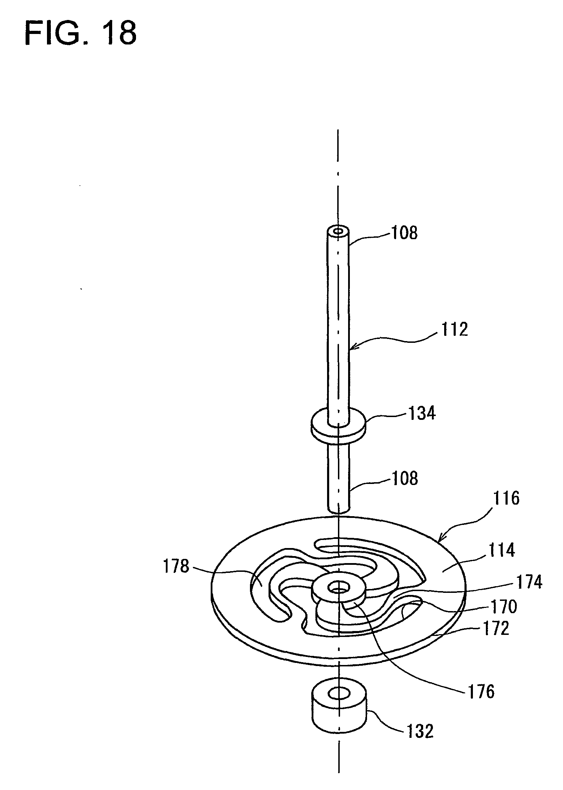

FIG.18 is a schematic perspective view of the rod 112, the valve element unit 116 and a ring member for forming the retainer 132, illustrated in a disassembled state. In the valve-element connection step S12, the valve element unit 116 having at least the valve element 114 is connected to the first end 108 of the rod 112 using the retainer 132.

The insertion step S14 is performed after the valve-element connection step S12. In the insertion step S14, the second end 110 of the rod 112 is inserted through the through hole 130 of the valve block 38.

The armature connection step S16 is performed after the insertion step S14. In the armature connection step S16, the armature 118 is connected to the second end 110 of the rod 112. For instance, the armature 118 is fixed to the second end 110 of the rod 112 with a bolt.

In the assembling method of the control valve, the valve-element connection step S12, the insertion step S14 and the armature connection step S16 are performed sequentially. Thus, the valve element unit 116 can be connected to the rod 112 in an operation-easy environment. This improves connection reliability between the valve element unit 116 and the rod 112. As a result, the assembled control valve has high reliability. Therefore, the power generating apparatus of renewable energy type and the wind turbine generator equipped with this control valve has enhanced reliability.

In some embodiments, the LP valve 30 as the control valve is used in the hydraulic motor 14.

In the case where the LP valve of the hydraulic motor 14 is arranged near the working chamber 24, it is possible to reduce flow resistance between the LP valve and the working chamber 24. In the case where the LP valve 30 is arranged near the working chamber 24, it is preferable that the connection reliability of the valve element unit 116 to the rod 112 is high to enhance the reliability of the LP valve 30. In this aspect, according to this structure, the connection reliability of the valve element unit and the rod 112 in the LP valve 30 is high and thus the reliability of the power generating apparatus of renewable energy type can be further improved.

In some embodiments, the radial piston type fluid machine constituting the hydraulic motor 14 is, as illustrated in FIG.2, provided with: a plurality of the HP valves 28 for controlling supply of the working fluid to a plurality of the working chambers 24 respectively; a plurality of the LP valves 30 for controlling discharge of the working fluid from the plurality of the working chambers 24 respectively; at least one auxiliary valve 186 for controlling supply of the working fluid to at least one working chamber 24; and a plurality of the valve blocks 38 which are attached to the housing 23 and to which the plurality of the HP valves 28 and the plurality of the LP valves 30 are attached, respectively. The at least one auxiliary valve 186 has a cross-sectional passage area which is smaller than that of the HP valves 28. Further, as illustrated in FIG.9, the valve block 38 has the valve-block HP passage 42 inside for supply the working fluid to the working chamber 24. The valve-block HP passage 42 has a main flow part 188 where the HP valve 28 is arranged and a bypass part 190 which is arranged in parallel to the main flow pat 188 to bypass the HP valve 28 and where the auxiliary valve 186 is arranged.

Even in the state that the high pressure of the working fluid acts on the HP valve 28 and the HP valve 28 cannot be opened, the hydraulic motor 14 is capable of supplying the HP working fluid to the working chamber 24 at a prescribed timing by opening the auxiliary valve 186. Therefore, at the time of actuation of the hydraulic motor 14 when starting rotation of the rotation shaft 20 from a stopped state, or at the time of acceleration when accelerating rotation of the rotation shaft 20 from a slow rotation state, the auxiliary valve 186 is opened to supply the working fluid to the working chamber 24, thereby achieving the actuation or acceleration.

As a result, the hydraulic motor 14 is capable of providing large torque using the HP working fluid even if the pressure difference generated between both sides of the valve element 210 due to supply of the HP working fluid is significant. Alternatively, by using the small-size HP valve 28, this hydraulic motor 14 is capable of large torque using the working fluid even if the pressure difference between both sides of the valve element 210 of the HP valve 28 has exceeded an operable range of the HP valve 28.

In contrast, the hydraulic motor 14 is configured so that the valve block 38 has the valve-block HP passage 42 inside and the valve-block HP passage 42 has the main flow part 188 and the bypass part 190. Therefore, even if the auxiliary valve 186 is provided, there is no need to additionally provide a piping outside the valve block 38. Therefore, it is possible to prevent size increase of the hydraulic motor 14.

In some embodiments, a flow rate of the working fluid that is supplied to the working chamber 24 when the auxiliary valve 186 is open and the HP valve 28 is closed, is smaller than a flow rate of the working fluid that is supplied to the working chamber 24 when the auxiliary valve 186 is closed and the HP valve 28 is open.

In some embodiments, the valve block 38 includes an auxiliary block part 192 which is fixed to the valve block connection part 140 as illustrated in FIG.9. Further, the auxiliary valve 186 is attached to the auxiliary block part 192 and a part of the bypass part 190 is formed in the auxiliary block part 192. The auxiliary block part 192 is, for instance, fixed to the valve block connection part 140 with a bolt (not shown).

In some embodiments, as illustrated in FIG.9 and FIG.13, the valve block 38 has a HP valve containing space 193 of approximately circular cylindrical shape for housing the HP valve 28, and an annular passage 194 of a donut shape which extends to the HP valve containing space and which surrounds the HP valve 28.

The annular passage 194 forms a part of the valve-block HP passage 42. The inner passage (valve path) of the HP valve 28 is in communication with the annular passage 194 and the working fluid can enter the HP valve 28 through the annular passage 194.

In some embodiments, on an open-end side of the HP valve containing space 193, a ring screw 195 is screwed in the HP valve containing space 193, and the HP valve 28 is fixed with the ring screw 195. Therefore, by removing the ring screw 195, the HP valve 28 can be easily removed from the valve block 38.

In some embodiments, the HP valve containing space 193 is arranged such that the axis of the HP valve containing space 193 is oblique with respect to the attaching face 85 as illustrated in FIG.9 and FIG.13. More specifically, the HP valve containing space 193 is arranged such that the axis of the Hp valve containing space 193 is oblique with respect to a tangential direction of the rotation shaft 20. Thus, the open end of the HP valve containing space 193 faces outward with respect to the tangential direction of the rotation shaft 20. As a result, the HP valve 28 can be easily removed form the valve block 38 without detaching the valve block 38 from the housing 23.

In some embodiments, the HP valve containing space 193 is formed at one side of the valve block 38 in the tangential direction of the rotation shaft 20. As illustrated in FIG.2, a plurality of the valve bocks is arranged in the circumferential direction of the rotation shaft 20 so that the side of one valve block 38 where the HP valve containing space 193 is formed faces the side of another valve block 38 and the other side where the HP valve containing space 193 faces the other side of another valve block 38.

In this structure, adjacent two of the HP valves 28 are arranged close to each other. This facilitates attaching of the HP valves 28 with respect to the valve blocks 38, removal of the HP valves 28 from the valve blocks 38. Further, by arranging two HP valves 28 close to each other, the two HP valves 28 can be connected easily to one HP axial passage 56.

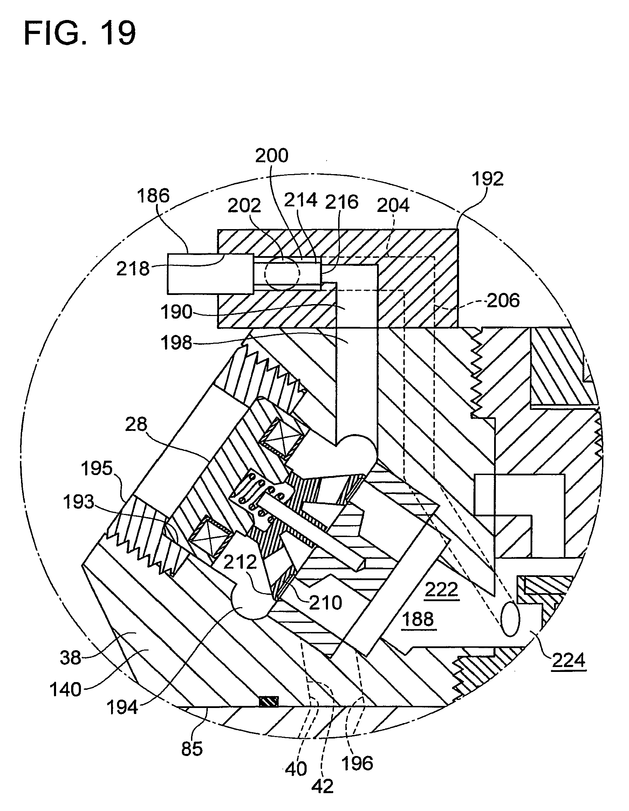

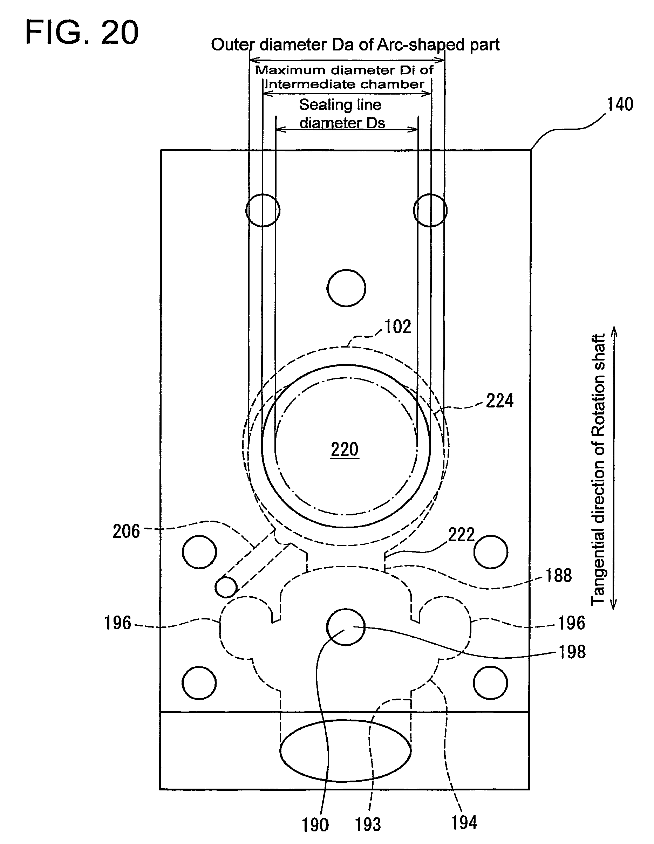

FIG.19 is an expanded cross-sectional view of region XIX of FIG.9. FIG.20 is a schematic plain view of the valve block connection part 140 illustrating a structure of the valve-block HP passage 42 according to some embodiments. FIG.19 illustrates the HP valve 28 in a valve-open state.

In some embodiments, as illustrated in FIG.13, FIG.19 and FIG.20, the annular passage 194 and two valve-block HP ports 40 are connected by two first linear passages formed in the valve block 38.

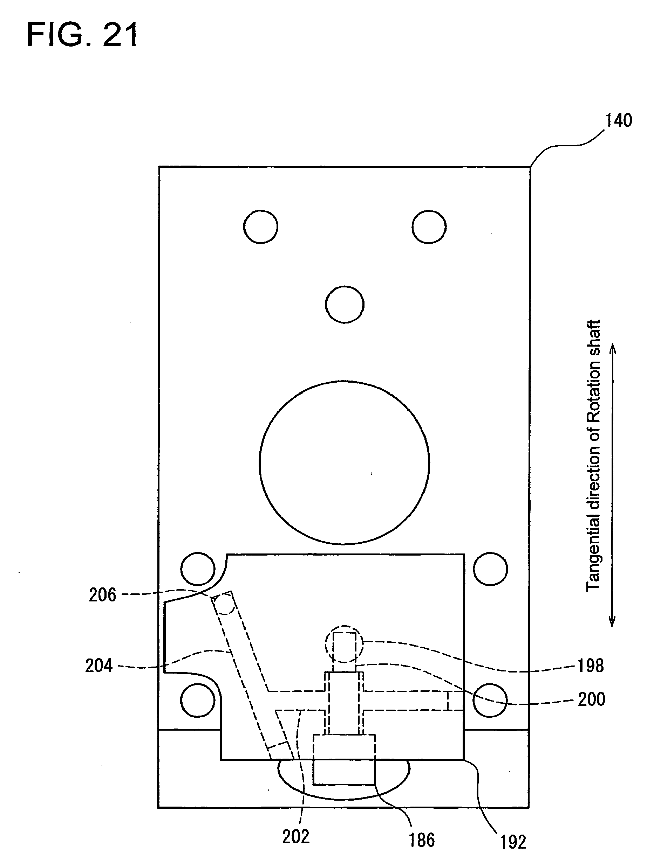

FIG.21 is a schematic plain view of the valve block connection part 140 according to some embodiments, in the state where the auxiliary block part 192 and the auxiliary valve 186 are installed, to illustrate a structure of the bypass part 190.

As illustrated in FIG.13, FIG.19, FIG.20 and FIG.21, the bypass part 190 has a second linear passage 198 extending from the annular passage 194, a third linear passage 200 extending from an end of the second linear passage 198, a fourth linear passage 202 extending from an end of the third linear passage 200, a fifth linear passage 204 extending from an end of the fourth linear passage 202, and a sixth linear passage 206 extending from an end of the fifth linear passage 204.

Each set of the second linear passage 198 and the third linear passage 200; the third linear passage 200 and the fourth linear passage 202; the fourth linear passage 202 and the fifth linear passage 204; and the fifth linear passage 204 and the sixth linear passage 206 has axes that intersect with each other.

The axes of the third linear passage 200, the fourth linear passage 202 and the fifth linear passage 204 extend along the attaching face 85 of the valve block 38 and are formed inside the auxiliary block part 192.

In this structure, the third linear passage 200, the fourth linear passage 202 and the fifth linear passage 204 can be easily formed in the auxiliary block part 192 by drilling the auxiliary block part 192. Further, openings formed by drilling can be easily sealed with plugs.

In some embodiments, as illustrated in FIG.19, the valve element 210 of each of the HP valves 28 has a HP valve-element pressure receiving face 212 which is configured to receive pressure from the working fluid in the state where each of the HP valves 28 is closed. The valve element 214 of at least one auxiliary valve 186 has an auxiliary valve-element pressure receiving face 216 which is configured to receive pressure from the working fluid when the at least one auxiliary valve 186 is closed. An area of the auxiliary valve-element pressure receiving face 216 is smaller than an area of the HP valve-element pressure receiving face 212.

In this structure, the area of the auxiliary valve-element pressure receiving face 216 is smaller than the area of the HP valve-element pressure receiving face 212, and this makes it possible to reduce the size of the auxiliary valve 186 with respect to the HP valve 28. As a result, it is possible to further downsize the hydraulic motor 14.

In some embodiments, the third linear passage 200 has a circular cylindrical shape with a stepped portion and the stepped portion of the third linear passage 200 forms the valve seat of the auxiliary valve 186. In this case, the auxiliary valve 186 is capable of closing and opening the third passage.

In some embodiments, a plurality of the cylinder parts 22 is arranged along the circumferential direction of the rotation shaft 20 as illustrated in FIG.2 to form at least one annular cylinder array, and a plurality of the auxiliary valves 186 is configured to control, independently of the HP valves 28, supply of the working fluid to a plurality of the working chambers 24, respectively, formed by the annular cylinder array.

In this structure, a plurality of the cylinder parts 22 forms the annular cylinder array and, with a plurality of the pistons 26, forms a plurality of the working chambers 24. By varying the phases of the pistons 26, the working fluid can be supplied respectively by the auxiliary valves 186 to the working chambers 24 whose pistons 26 have different phases. As a result, the rotation shaft 20 can be rotated from the stopped state and the hydraulic motor 14 can be started smoothly.

In some embodiments, a plurality of the cylinder parts 22 is arranged along the axial direction of the rotation shaft 20 as illustrated in FIG.3 to form at least one linear cylinder array, and a plurality of the auxiliary valves 186 is configured to control, independently of the plurality of the high pressure valves 28, supply of the working fluid to the plurality of the working chambers 24, respectively, formed by the linear cylinder array.

In this structure, the plurality of the cylinder parts 22 forms the linear cylinder array and, with a plurality of the pistons 26, forms a plurality of the working chambers 24. By varying the phases of the pistons, the working fluid can be supplied respectively by the auxiliary valves 186 to the working chambers 24 whose pistons 26 have different phases. As a result, the rotation shaft 20 can be rotated from the stopped state and the hydraulic motor 14 can be started smoothly.

In some embodiments, the valve block 38 has an auxiliary-valve containing space 218 for housing the auxiliary valve 186 at least in part. The auxiliary-valve containing space 218 has an opening at an outer surface of the valve block 38.

In this structure, the auxiliary-valve containing space 218 for housing at least a part of the auxiliary valve 186 has the opening at the outer surface of the valve block 38. This makes it possible to perform maintenance of the auxiliary valve 186 easily.

In some embodiments, the auxiliary-valve containing space 218 is formed in the auxiliary block part 192 which constitutes a part of the valve block 38, and a part of the auxiliary-valve containing space 218 constitutes a part of the bypass part 190.

In some embodiments, the auxiliary-valve containing space 218 has a circular cylindrical shape and is arranged coaxially with the third linear passage 200.

In some embodiments, the valve block 38 is made by casting.

According to this structure, the valve block 38 can be manufactured easily.

In some embodiments, at least one of the valve block body 138, the valve block connection part 140 or the auxiliary block part 192 is made by casting.

According to this structure, at least one of the valve block body 138, the valve block connection part 140 or the auxiliary block part 192 can be manufactured easily.

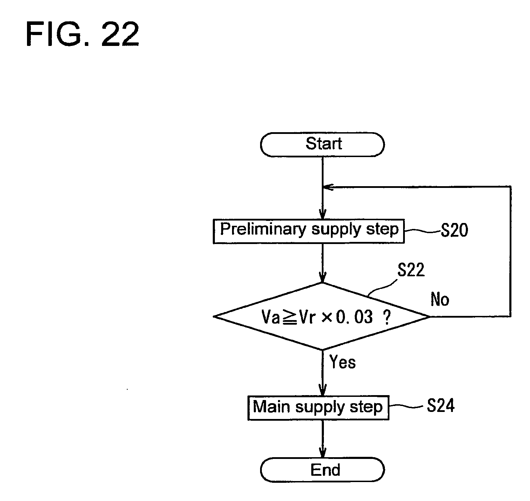

FIG.22 is a flow chart schematically illustrating a process of starting the hydraulic motor 14 according to some embodiments. The method for starting the hydraulic motor 14 has a preliminary supply step S20, a determination step S22 and a main supply step S24.

In the preliminary supply step S20, at least one auxiliary valve 186 is opened to supply the working fluid to at least one working chamber 24 via the auxiliary valve 186.

The main supply step S24 is performed after the preliminary supply step S20. In the main supply step S24, the HP valves 28 are opened to supply the working fluid to the working chambers 24 via the HP valves 28.

In the determination step S22, it is determined whether or not the speed (rotation speed) Va of the hydraulic motor 14 has reached 3% or above of the normal speed (rated rotation speed) Vr. If the determination result shows that the speed Va is 3% or above of the normal speed Vr, the main supply step S24 is performed.

According to the method for starting the hydraulic motor 14, in order to start the hydraulic motor 14 from the stopped state, the preliminary supply step S20 is performed to supply the working fluid to the working chamber 24 through the auxiliary valve 186. The auxiliary valve 186 has a cross-sectional passage area which is smaller than that of the HP valves 28 and thus, it is possible to supply the working fluid to the working chamber 24, hence rotating the rotation shaft 20 from the stopped state. Further, when the rotation shaft 20 begins rotating and the speed of the hydraulic motor 14 reaches 3% or above of the normal operating speed, the pressure of the working chamber 24 can be increased using the inertia of the rotation shaft 20. Therefore, the pressure difference between the valve-block HP passage 42 and the working chamber 24, which impinges on the valve element 210 of the HP valve 28, is reduced and thus, the HP valve 28 can be opened reliably. As a result, a large amount of the working fluid can be supplied to the working chamber 24 through the HP valve 28 compared to the auxiliary valve 186. This makes it possible to operate the hydraulic motor 14 reliably at the normal operating speed Vr.

The power generating apparatus of renewable energy type according to some embodiments is provided with the hydraulic motor 14 having the auxiliary valve 186 and thus has excellent startability. Despite being provided with the auxiliary valve 186, the hydraulic motor 14 can be downsized. Therefore, the power generating apparatus of renewable energy can be downsized as well.

Further, strength and direction of the wind constantly changes and thus, in the case where the power generating apparatus of renewable energy type is the wind turbine generator, the speed of the hydraulic motor 14 is likely to change in a wide range. When the speed of the hydraulic motor 14 significantly declines or the hydraulic motor 14 stops owning to effects of the wind, it is desirable to accelerate the speed of the hydraulic motor 14 or to start the hydraulic motor 14. In this aspect, according to this structure, the wind turbine generator is provided with the hydraulic motor 14 having the auxiliary valve 186 and has excellent startability. Therefore, it is possible to promptly accelerate the speed of the hydraulic motor 14 or to promptly start the hydraulic motor 14.

Meanwhile, according to this structure, despite being provided with the auxiliary valve 186, the hydraulic motor 14 can be downsized. Therefore, the power generating apparatus of renewable energy can be downsized as well.

In some embodiments, the fluid machine of piston type constituting the hydraulic pump 12 or the hydraulic motor 14 is provided with a valve cylinder interface. The valve cylinder interface is provided for fluid communication between the working chamber 24 formed by the cylinder part 22 and the piston 96, and the HP valve 28 for controlling flow of the HP working fluid and the LP valve 30 for controlling flow of the working fluid to the LP working fluid.

The valve cylinder interface is provided with the valve block 38. As illustrated in FIG.9, FIG.13, FIG.14 and FIG.20, the valve block 38 has an intermediate chamber 220 of a circular cylindrical shape configured to communicate with the working chamber 24, the main port 102 for connecting the intermediate chamber 220 and the cylinder part 22 coaxially to each other, and a communication passage 222 for communication between one of the HP valve 28 or the LP valve 30 and intermediate chamber 220.

Further, the other one of the HP valve 28 and the LP valve 30 is arranged adjacent to the intermediate chamber 220 and coaxially with the intermediate chamber 220. The communication passage 222 has an arc-shaped part 224 which surrounds at least in part an outer circumference of the intermediate chamber 220.

In the above valve interface, the communication passage 222 has the arc-shaped part 224 which surrounds at least in part the outer circumference of the intermediate chamber 220. Thus, it is possible to increase the cross-sectional passage area of the communication passage 222, particularly the cross-sectional passage area of the communication passage 222 in the vicinity of the intermediate chamber 220. Therefore, with the above-described valve interface, it is possible to increase the cross-sectional passage area between one of the HP valve 28 or the LP valve 30 and the working chamber 24.

In some embodiments, as illustrated in FIG.10, the maximum diameter Di of the intermediate chamber 220 is not smaller than the inner diameter (bore diameter) Dc of the cylinder part 22.

In this structure, the cross-sectional passage area of the intermediate chamber 220 can be enlarged and thus, it is possible to reduce flow resistance between the HP valve 28 and the working chamber 24, and between the LP valve 30 and the working chamber 24.

In some embodiments, the valve interface is further provided with an annular main seal 226 as illustrated in FIG.10. The annular main seal 226 has a sealing line for sealing the periphery of a connection area where the valve block 38 and the cylinder part 22 are connected. Further, as illustrated in FIG.10 and FIG.20, the outer diameter Da of the arc-shaped part 224 and the maximum diameter Di of the intermediate chamber 220 are greater than a diameter Ds of the sealing line of the main seal 226.

The larger the outer diameter of the arc-shaped part 224 is, the larger the cross-sectional passage area in the arc-shaped part 224 can be increased. This, however, also increases the area of the wall surface of the arc-shaped part 24 on which the pressure from the working fluid impinges. Thus, in the case of simply increasing the outer diameter Da of the arc-shaped part 224, the pressure impinging on the valve block 38 from the working fluid increases and a larger fastening force is needed to fix the valve block 38. In this aspect, according to this structure, the diameter Ds of the sealing line is made smaller, thereby mitigating the pressure impinging on the valve block 38 from the working fluid and reducing the fastening force needed to fix the valve block 38 to the housing 23. As a result, the valve block 38 and a fastening member for fixing the valve block 38 can be downsized.

In some embodiments, as illustrated in FIG.10, the bypass part 190 of the valve-block HP passage 42 merges to the main flow part 188 in the intermediate chamber 220.

In some embodiments, the sixth linear passage 206 of the bypass part 190 opens to the wall surface of the arc-shaped part 224.

In some embodiments, the other one of the HP valve 28 or the LP valve 30 which is arranged adjacent to the intermediate chamber 220, has the annular valve element 114 arranged in the intermediate chamber 220. The valve element 114 is configured to allow the working fluid to flow outside and inside the valve element 114.

In this structure, the other valve that is arranged adjacent to the intermediate chamber 220 has the annular valve element 114 and the working fluid is allowed to flow outside and inside the annular valve element 114. Therefore, the working fluid passage area in the periphery of the valve element 114 of the other valve can be further enhanced.

In some embodiments, the valve element 114 is arranged concentrically in the intermediate chamber 220.

In this structure, the valve element 114 of the other valve is arranged concentrically in the intermediate chamber 220. Thus, the working fluid can flow smoothly inside and outside the valve element 114 and the flow resistance of the working fluid can be reduced.

In some embodiments, the valve cylinder interface is arranged between the opening of the housing 23 and the valve element 114 as illustrated in FIG.10. The valve cylinder interface is further provided with the annular part 182 opposite to the valve element 114, and the rim part 184 provided integrally at the outer edge of the annular part 182 for surrounding the valve element 114 when the valve element 114 is unseated from the valve seat 106.

According to this structure, the annular part 182 and the rim part 184 constitute a barrier and, the pressure that the valve element 114 receives from the flow of the working fluid is reduced by the annular part 182 and the rim part 184. As a result, the movement of the other valve is stabilized.

In some embodiments, the valve cylinder interface is further provided with a sieve part 228 for preventing foreign objects from entering the working chamber 24.

According to this structure, it is possible to prevent foreign objects from entering the working chamber 23 using the sieve part 228. Therefore, the reliability of the fluid machine equipped with this valve cylinder interface is improved.

In some embodiments, the sieve part 228 is constituted by a plate-like member having a plurality of holes, and is arranged in the vicinity of the main port 110 so as to separate the cylinder part 22 and the intermediate chamber 220.

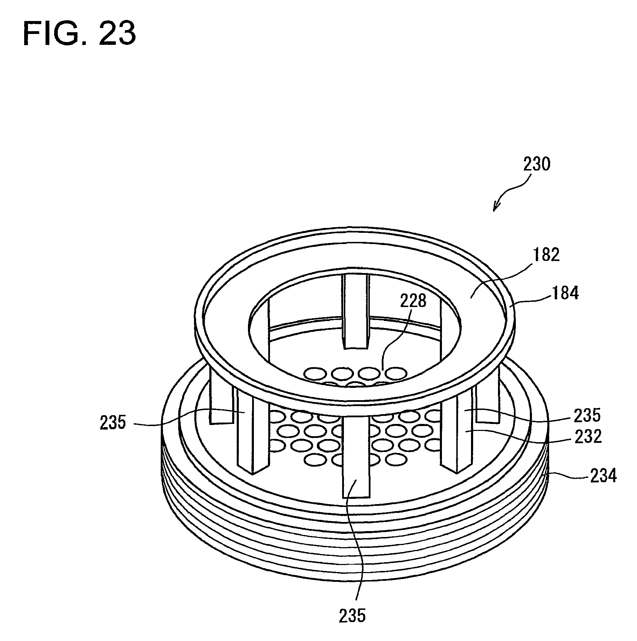

FIG.23 is a schematic perspective view of the interface member 230 according to some embodiments. In some embodiments, as illustrated in FIG.23, the annular part 182, the rim part 184, the sieve part 28 and a connection part 232 extending between the sieve part 228 and the annular part 182 are integrally connected to form the interface member 230.

According to this structure, by attaching the interface member 230 to the valve block 38, the annular part 182, the rim part 184 and the sieve part 228 can be easily attached.

In some embodiments, the interface member 230 has the threaded part 234 for fixing the interface member 230 to the valve block 38 as illustrated in FIG.23.

According to this structure, by screwing the threaded part to the valve block 38, the interface member 230 can be firmly fixed to the valve block 38 with a simple structure.

In some embodiments, the connection part 232 is formed by a plurality of pillar parts 235. The pillar parts 235 are arranged around the axis of the annular part 182 with distance from one another. Thus, the working fluid can pass between the pillar parts 235 and flow smoothly along the radial direction of the annular part 182.

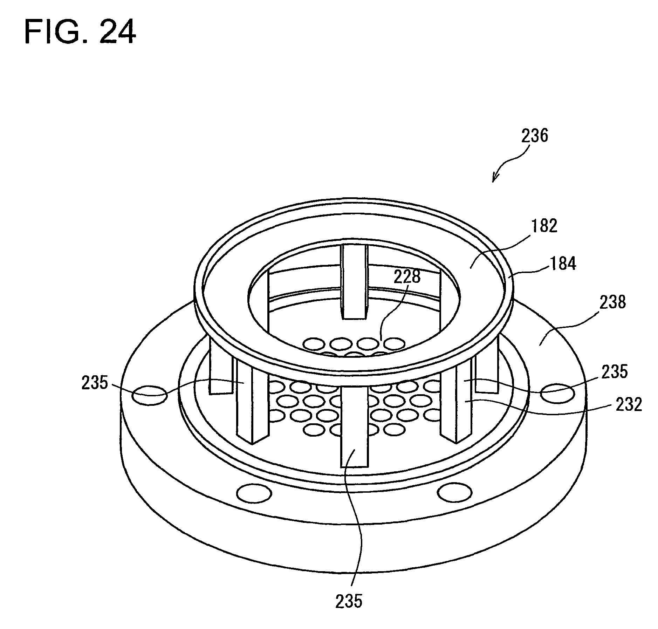

FIG.24 is a schematic perspective view of the interface member 236 according to some embodiments. In some embodiments, the interface member 236 has a flange part 238 for fixing the valve block 38 to the interface member 236 as illustrated in FIG.24.

According to this structure, by fastening the flange part 238 to the valve block 38, the valve block 38 can be firmly fixed to the interface member 236 with a simple structure.

In some embodiments, the valve block 38 is made by casting.

According to this structure, the valve block 38 can be manufactured easily.

In some embodiments, the interface member 230 is made by casting.

According to this structure, the interface member 230 can be manufactured easily.

In some embodiments, the valve cylinder interface is arranged between a valve cushion 38 and a flange part 240 of a cylinder sleeve forming the cylinder part 22 as illustrated in FIG.10. The valve cylinder interface is further provided with a cushion member 242 which is made of a material softer than a material of the valve block 38.

In the case where the cylinder part 22 is formed by the cylinder sleeve, friction against the piston 26 causes displacement of the cylinder sleeve relative to the housing 23 which supports the cylinder sleeve. In this aspect, according to this structure, the valve block 38 is capable of preventing displacement of the cylinder sleeve relative to the housing 23 via the cushion member 242.

In some embodiments, the cushion member 242 has an annular shape and is made of soft metal, rubber or resin such as polyurethane.

In some embodiments, the cushion member 242 is arranged between the interface member 230 fixed to the valve block 38 and the flange part 240 of the cylinder sleeve.

In some embodiments, as illustrated in FIG.10, the interface member 230 has an inner circumferential surface 244 which surrounds an end of the cylinder part 22 and the main seal 226 is configured to seal a space between the inner circumferential surface of the interface member 230 and the outer circumferential surface of the cylinder part 22.

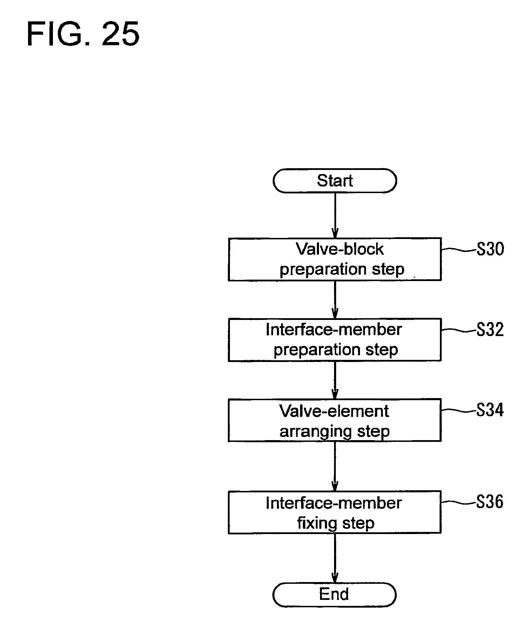

FIG.25 is a flow chart schematically illustrating a process of the assembling method of the valve cylinder interface according to some embodiments. In some embodiments, the assembling method of the valve cylinder interface has, as illustrated in FIG.25, a valve-block preparation step S30, an interface-member preparation step S32, a valve-element arranging step S34 and an interface-member fixing step S36.

In the valve-block preparation step S30, the valve block 38 is prepared. In the valve-block preparation step S30, the valve block 38 may be manufactured or purchased from an outside facility.

In the interface-member preparation step S32, the interface member 230 is prepared. In the interface-member preparation step S32, the interface member 230 may be manufactured or purchased from an outside facility.

In the valve-element arranging step S34, the annular valve element 114 of the other valve of the HP valve 28 and the LP valve 30 which is arranged adjacent to the intermediate chamber 220 is arranged in the intermediate chamber 220.

The interface-member fixing step S36 is performed after the valve-element arranging step S34. In the interface-member fixing step S36, the interface member 230 is fixed to the valve block 38. When the interface member 230 is fixed to the valve block 38, the annular part 182 is arranged between the main port 102 of the valve block 38 and the valve element 114 to be opposite to the valve element 114. Further, when the valve element 114 is unseated from the valve seat 106, the rim part 184 surrounds the valve element 114.

According to this structure, the valve cylinder interface can be assembled easily.

The power generating apparatus of renewable energy type according to some embodiments is provided with the radial piston hydraulic machine, as the hydraulic pump 12 or the hydraulic motor 14, having the above-described valve cylinder interface. In this structure, by proving the valve interface in the fluid machine, the working fluid can smoothly flow between the HP valve 28 and the working chamber 24, and between the LP valve 30 and the working chamber 24. Therefore, the torque of the rotation shaft 20 is efficiently transmitted by the fluid machine to the generator 16. As a result, the power generating apparatus of renewable energy type has excellent power generation efficiency.

In some embodiments, the power generating apparatus of renewable energy type is a wind turbine generator. According to this structure, the fluid machine has the valve cylinder interface and thus, the power generation efficiency of the power generating apparatus of renewable energy type is improved.

In some embodiments, the LP valve 30 of the HP valve 28 or the LP valve 30 is arrange adjacent to the intermediate chamber 220.

In the hydraulic machine, between the HP valve 28 and the LP valve 30, the LP valve 30 for supplying the working fluid of relatively low pressure is maintained constantly in the open state, whereas the HP valve 28 for supplying the working fluid of relatively high pressure is maintained constantly in the closed state. As a result, the working chamber 24 can be maintained in a non-working state. Further, the rotation speed of the hydraulic motor 14 can be adjusted by adjusting the number of the working chambers 24 of the hydraulic motor 14.

If the rotation speed of the hydraulic motor 14 can be adjusted, the generator 16 can be driven at an optimal rotation speed according to the amount of the renewable energy. As a result, it is possible to maintain high power generation efficiency of the power generating apparatus of renewable energy. Particularly, in the case where the renewable energy is the wind, strength of the wind and the wind direction tend to change easily and thus the renewable energy that the blade 105 receives changes largely. Therefore, it is beneficial that the power generation efficiency of the power generating apparatus of renewable energy type can be maintained high by adjusting the rotation speed of the hydraulic motor 14.

This, however, has a disadvantage that, when the working chamber 24 is in the non-working state, fluid energy of the working fluid is consumed while the working fluid flows back and forth between the LP valve 30 and the working chamber 24.

In this aspect, according to this structure, the LP valve 30 is arranged adjacent to the intermediate chamber 220. Therefore, when the working chamber 24 is maintained in the non-working state, the LP working fluid can flow smoothly between the working chamber 24 and the LP valve 30. As a result, it is possible to reduce loss of fluid energy although the working chamber 24 is maintained in the non-working state, and it is possible to maintain the power generation efficiency of power generating apparatus of renewable energy type high even when the amount of the renewable energy that the blade 105 receives changes.

In some embodiments, the wind turbine generator has a tower 246 installed on the ground or offshore, and a nacelle 248 supported by the tower 246 as illustrated in FIG.1. Inside the nacelle 248, a main bearing 250 is installed along with the hydraulic pump 12, the hydraulic motor 14 and the generator 16. The main bearing 250 is configured to support the main shaft 10 rotatably. The blade 105 is connected to the main shaft 10 via a hub 252 and the main shaft 10 is rotated when the blade 105 receives the wind.

While the embodiments of the present invention have been described, it is obvious to those skilled in the art that the above embodiments may be arbitrarily combined.

The term "along" used in the description of the embodiments not just refers to a state of being strictly parallel in a geometric sense with respect to a reference direction or object as a reference but also includes a state of being at an angle to a certain extent with respect the reference direction or object (e.g. 30° or less)

### Reference Signs list

10: Main shaft, 12: Hydraulic pump, 14: Hydraulic motor, 16: Generator, 20: Rotation shaft, 22: Cylinder part, 26: Piston, 28:HP valve, 30:LP valve, 32: Eccentric cam, 34:Shoe, 36: Ball joint, 38: Valve block, 40: Valve-block HP port, 42: Valve-block HP passage, 44: Valve-block LP port, 46: Valve-block LP passage, 48: Housing HP port, 50: Housing HP passage, 52: Housing LP port, 54: Housing LP passage, 56: HP axial passage, 58: Bearing, 60: Support block part, 62: HP external port, 64: Support block HP passage, 66: HP accumulator, 68: LP axial passage, 70: Cylindrical part, 72: End wall part , 74: Annular groove, 76: LP external port, 78: First LP accumulator, 80: Second LP accumulator, 81: LP accumulator port, 82: Crank case, 84: Equalizing path , 85: Attaching face, 86: HP seal member, 88: Seal groove, 90: Mounting face , 92: HP seal member, 94: Backup ring, 96: LP seal member, 98: Seal groove, 100: Drain groove, 102: Main port, 104: Annular groove, 105: Blade, 106: Valve seat, 108: First end , 110: Second end, 112: Rod, 114: Valve element, 116: Valve element unit, 118: Armature, 120: Biasing member, 122: Electromagnet, 124: Wall, 126: Inner passage , 128: Containing chamber, 130: Through hole, 132: Retainer, 134: Flange part for fixing valve element, 136: Damping depression, 138: Valve block body, 140: Valve block connection part, 142: Thread groove, 144: Cylindrical part, 146: Thread hole part, 148: Valve block body, 150: Valve block connection part, 152: Bolt, 154: Tubular passage , 156: Radial passage, 158: Stator , 160: Solenoid, 162: Armature room, 164: Cup part, 166: Guide part, 168: Casing , 169: Threaded part, 170: Sealing line, 172 Sealing line, 174: Elastic member, 176: Boss, 178: Opening, 180: Backpressure adjusting passage, 182: Annular part, 184: Rim part, 186: Auxiliary valve, 188: Main flow part, 190: Bypass part, 192: Auxiliary block part, 193: HP valve containing space, 194: Annular passage, 196: First linear passage, 198: Second linear passage, 200: Third linear passage, 202: Fourth linear passage, 204: Fifth linear passage, 206: Sixth linear passage, 210: Valve element, 212: HP valve-element pressure receiving face, 214: Valve element, 216: Auxiliary valve-element pressure receiving face, 218: Auxiliary-valve containing space, 220: Intermediate chamber, 222: Communication passage , 224: Arc-shaped part, 226: Main seal, 228: Sieve part, 230: Interface member, 232: Connection part, 234: Threaded part, 235: Pillar part, 236: Interface member, 238: Flange part, 240: Flange part, 242: Cushion member, 244: Inner circumferential surface, 246: Tower, 248: Nacelle, 250: Main bearing, 252: Hub

## Claims

1. A control valve (30) to be arranged in a periphery of a working chamber (24) formed by a cylinder (22) and a piston (26), to control supply of working fluid to the working chamber (24) or control discharge of the working fluid from the working chamber (24), the control valve comprising:
a valve seat (106);
a rod (112) having a first (108) end and a second end (110);
a valve element unit (116) which is connected to the first end (108) of the rod (112) and which has at least a valve element (114);
an armature (118) connected to the second end (110) of the rod (112);
a biasing member (120) for biasing the armature (118) in a biasing direction;
an electromagnet (122) configured to attract the armature (118) and drive the armature (118) in a direction opposite to the biasing direction when electric power is supplied; and
a valve block (38) including: a wall (124) where the valve seat (106) is formed; an inner passage (126) for the working fluid with an open end bordered by the valve seat (106); a containing chamber (128) for housing the armature (118) and the electromagnet (122); and a through hole (130) which extends between the wall (124) and the containing chamber (128) and into which the rod (112) is inserted,
wherein the second end (110) of the rod (112) is configured to pass through the through hole (130),
said control valve (30) being **characterized in that** the valve element unit (116) is connected to the first end (108) by a retainer (132) which is fixed to the first end (108) of the rod (112),
wherein the retainer (132) is formed by a ring member which is fixed to the first end (108) of the rod (112),
wherein the rod (112) has a fixing flange part (134) for connecting the valve element unit (116) and the first end (108) of the rod (112) cooperatively with the ring member, and
the control valve further comprises a damping depression (136) for damping vibration of the rod (112) cooperatively with a damping flange,
wherein the damping flange is formed by the fixing flange (134).

2. The control valve (30) according to claim 1, wherein the valve block (38) comprises:
a valve block body (138, 148) having the containing chamber (128);
a valve block connection part (140, 150) which is connected to the valve block body (138),
wherein the valve block body (138) is configured to be fixed via the valve block connection part (140) to a housing (23) which has the cylinder part (22)
wherein the valve block body (138) has a cylindrical part (144) having a thread groove (142) formed on a part of an outer periphery, and
wherein the valve block connection part (140) has a thread hole part (146) to be threadedly engaged with the thread groove (142) of the part of the cylindrical part (144).

3. The control valve according to any one of claims 1 or 2,
wherein the electromagnet (122) includes a stator (158) and a solenoid (160),
and
wherein the control valve (38) further comprises a casing (168), the casing having a cup part (164) forming with the stator (158) an armature chamber (162) where the armature (118) is arranged, and a cylindrical guide part (166) which is arranged in the through hole (130) and in which the rod (112) is slidably inserted.

4. The control valve (30) according to any one of claims 1 to 3, wherein the valve element (114) has an annular shape and includes two concentric sealing lines (170, 172), and
wherein the valve element unit (116) has at least one elastic member (174) which is provided between the rod (112) and the valve element (114).

5. The control valve according to any one of claims 1 through 4,
wherein the electromagnet (122) includes a stator (158) and a solenoid (160),
and
wherein the biasing member (120) is arranged between the stator (158) and the armature (118).

6. The control valve (30) according to any one of claims 1 to 5, wherein the valve block (38) further comprises a backpressure adjusting passage (180) extending between the inner passage (126) and the containing chamber (128).

7. The control valve according to any one of claims 4 through 6, further comprising:
an annular part (182) arranged farther from the valve seat (106) than the valve element (114) and arranged to face the valve element (114); and
a rim part (184) extending from an outer edge of the annular part (182) toward the valve seat (106), the rim part (184) being configured to surround the valve element (114) when the valve element (114) is unseated.

8. A method for assembling a control valve of any one of claims 1 through 7 to be arranged in a periphery of a working chamber (24) formed by a cylinder and a piston to control supply of working fluid to the working chamber (24) or control discharge of the working fluid from the working chamber (24), **characterized in that** the method comprises:
a valve-block preparation step (S10) of preparing a valve block (38) including: a wall (124) where a valve seat (106) is formed; an inner passage (126) for the working fluid with an open end bordered by the valve seat (106); a containing chamber (128) for housing an armature (118), a biasing member (120) and an electromagnet (122); and a through hole (130) which extends between the wall (124) and the containing chamber (128) and into which a rod (112) is inserted;
a valve-element connection step (S12) of connecting a valve element unit (116) having at least a valve element (114) to a first end (108) of the rod (112);
an insertion step (S14) of inserting a second end (110) of the rod (112) in the through hole (130) of the valve block (38) after the valve-element connection step (S14); and
an armature connection step (S16) of connecting the armature (118) to the second end (110) of the rod (112) after the insertion step (S14).

9. A power generating apparatus of renewable energy type for generating electric power from renewable energy, the apparatus comprising:
a main shaft (10) provided to rotate using the renewable energy;
a hydraulic pump (12) configured to pressurize and discharge working fluid by torque of the main shaft (10);
a hydraulic motor (14) configured to provide torque using pressure of the working fluid discharged by the hydraulic pump (12); and
a generator configured (16) to generate power using the torque supplied by the hydraulic motor (14),
wherein one of the hydraulic pump (12) or the hydraulic motor (14) is constituted by a radial piston fluid machine,
wherein the fluid machine comprises:
a rotation shaft (20) ;
a housing (23) having at least one cylinder part (22) extending along a radial direction of the rotational shaft;
a piston (26) arranged in the at least one cylinder part (22) and forming a working chamber (24) with the at least one cylinder part (22);
a converting mechanism (32, 34, 36) for performing conversion between rotational motion of the rotation shaft and reciprocating motion of the piston (26);
at least one high pressure valve (28) for controlling flow of high pressure working fluid; and
at least one low pressure valve (30) for controlling flow of low pressure working fluid, and
wherein one of the high pressure valve (28) or the low pressure valve (30) is constituted by a control valve of any one of claims 1 through 7

10. The power generating apparatus of renewable energy type according to claim 9, wherein the control valve forms the low pressure valve (30) of the hydraulic motor.

11. The power generating apparatus of renewable energy type according to claim 9 or 10, further comprising:
at least one blade (105) configured to rotate the main shaft (10) upon receiving wind as the renewable energy,
wherein the power generating apparatus of renewable energy type is a wind turbine generator.

## Patentansprüche

1. Steuerventil (30) zur Anordnung in der Umgebung einer Arbeitskammer (24), die durch einen Zylinder (22) und einen Kolben (26) gebildet wird, um die Zufuhr von Arbeitsfluid zu der Arbeitskammer (24) zu steuern oder das Ablassen des Arbeitsfluids aus der Arbeitskammer (24) zu steuern, wobei das Steuerventil umfasst:
einen Ventilsitz (106),
einen Stab (112), der ein erstes Ende (108) und ein zweites Ende (110) aufweist,
eine Ventilelementeinheit (116), die mit dem ersten Ende (108) des Stabes (112) verbunden ist und die mindestens ein Ventilelement (114) hat,
einen Anker (118), der mit dem zweiten Ende (110) des Stabes (112) verbunden ist,
ein Vorspannelement (120) zum Vorspannen des Ankers (118) in eine Vorspannrichtung,
einen Elektromagneten (122), der dafür konfiguriert ist, den Anker (118) anzuziehen und den Anker (118) in einer Richtung anzutreiben, die der Vorspannrichtung entgegengesetzt ist, wenn elektrischer Strom zugeführt wird, und
einen Ventilblock (38) der enthält: eine Wand (124), wo der Ventilsitz (106) ausgebildet ist, einen inneren Durchgang (126) für das Arbeitsfluid, wobei ein offenes Ende durch den Ventilsitz (106) begrenzt wird, eine Aufnahmekammer (128) zum Aufnehmen des Ankers (118) und des Elektromagneten (122), und ein Durchgangsloch (130), das sich zwischen der Wand (124) und der Aufnahmekammer (128) erstreckt und in das der Stab (112) eingesetzt ist,
wobei das zweite Ende (110) des Stabes (112) dafür konfiguriert ist, durch das Durchgangsloch (130) geführt zu werden,
wobei das Steuerventil (30) **dadurch gekennzeichnet ist, dass** die Ventilelementeinheit (116) mit dem ersten Ende (108) durch einen Halter (132) verbunden ist, der an dem ersten Ende (108) des Stabes (112) befestigt ist,
wobei der Halter (132) durch ein Ringelement gebildet wird, das an dem ersten Ende (108) des Stabes (112) befestigt ist,
wobei der Stab (112) einen Befestigungsflanschteil (134) zum Verbinden der Ventilelementeinheit (116) und des ersten Endes (108) des Stabes (112) im Zusammenwirken mit dem Ringelement hat, und
das Steuerventil ferner eine Dämpfungsvertiefung (136) zum Dämpfen von Vibrationen des Stabes (112) im Zusammenwirken mit einem Dämpfungsflansch umfasst,
wobei der Dämpfungsflansch von dem Befestigungsflansch (134) gebildet wird.

2. Steuerventil (30) nach Anspruch 1, wobei der Ventilblock (38) umfasst:
einen Ventilblockkörper (138, 148), der die Aufnahmekammer (128) aufweist,
einen Ventilblockverbindungsteil (140, 150), der mit dem Ventilblockkörper (138) verbunden ist,
wobei der Ventilblockkörper (138) dafür konfiguriert ist, über den Ventilblockverbindungsteil (140) an einem Gehäuse (23) befestigt zu werden, das den Zylinderteil (22) hat,
wobei der Ventilblockkörper (138) einen zylindrischen Teil (144) hat, das eine Gewindenut (142) aufweist, die an einem Teil eines Außenumfangsrandes gebildet ist, und
wobei der Ventilblockverbindungsteil (140) einen Gewindelochteil (146) hat, der mit der Gewindenut (142) des Teils des zylindrischen Teils (144) zu verschrauben ist.

3. Steuerventil nach einem der Ansprüche 1 oder 2,
wobei der Elektromagnet (122) einen Stator (158) und ein Solenoid (160) enthält, und
wobei das Steuerventil (38) ferner eine Umfassung (168) umfasst, wobei die Umfassung einen Napfteil (164) aufweist, der mit dem Stator (158) eine Ankerkammer (162) bildet, wo der Anker (118) angeordnet ist, und einen zylindrischen Führungsteil (166) aufweist, der in dem Durchgangsloch (130) angeordnet ist und in den der Stab (112) gleitfähig eingeführt ist.

4. Steuerventil (30) nach einem der Ansprüche 1 bis 3, wobei das Ventilelement (114) eine Ringform hat und zwei konzentrische Dichtungslinien (170, 172) enthält, und
wobei die Ventilelementeinheit (116) mindestens ein elastisches Element (174) hat, das zwischen dem Stab (112) und dem Ventilelement (114) angeordnet ist.

5. Steuerventil nach einem der Ansprüche 1 bis 4,
wobei der Elektromagnet (122) einen Stator (158) und ein Solenoid (160) enthält, und
wobei das Vorspannelement (120) zwischen dem Stator (158) und dem Anker (118) angeordnet ist.

6. Steuerventil (30) nach einem der Ansprüche 1 bis 5, wobei der Ventilblock (38) ferner einen Staudruck-Justierdurchgang (180) umfasst, der sich zwischen dem inneren Durchgang (126) und der Aufnahmekammer (128) erstreckt.

7. Steuerventil nach einem der Ansprüche 4 bis 6, ferner umfassend:
einen ringförmigen Teil (182), der weiter von dem Ventilsitz (106) entfernt angeordnet ist als das Ventilelement (114) und so angeordnet ist, dass er dem Ventilelement (114) zugewandt ist, und
einen Randteil (184), der sich von einem äußeren Rand des ringförmigen Teils (182) in Richtung des Ventilsitzes (106) erstreckt, wobei der Randteil (184) dafür konfiguriert ist, das Ventilelement (114) zu umgeben, wenn das Ventilelement (114) von seinem Sitz abgehoben ist.

8. Verfahren zum Zusammensetzen eines Steuerventil nach einem der Ansprüche 1 bis 7, das in einem Umfangsrand einer Arbeitskammer (24) angeordnet werden soll, die durch einen Zylinder und einen Kolben gebildet wird, um die Zufuhr von Arbeitsfluid zu der Arbeitskammer (24) zu steuern oder das Ablassen des Arbeitsfluids aus der Arbeitskammer (24) zu steuern, **dadurch gekennzeichnet, dass** das Verfahren umfasst:
einen Ventilblock-Herstellungsschritt (S10) zum Herstellen eines Ventilblocks (38), der enthält: eine Wand (124), wo ein Ventilsitz (106) ausgebildet ist, einen inneren Durchgang (126) für das Arbeitsfluid, wobei ein offenes Ende durch den Ventilsitz (106) begrenzt wird, eine Aufnahmekammer (128) zum Aufnehmen eines Ankers (118), eines Vorspannelements (120) und eines Elektromagneten (122), und ein Durchgangsloch (130), das sich zwischen der Wand (124) und der Aufnahmekammer (128) erstreckt und in das ein Stab (112) eingesetzt wird,
einen Ventilelement-Verbindungsschritt (S12) zum Verbinden einer Ventilelementeinheit (116), die mindestens ein Ventilelement (114) aufweist, mit einem ersten Ende (108) des Stabes (112),
einen Einführschritt (S14) zum Einführen eines zweiten Endes (110) des Stabes (112) in das Durchgangsloch (130) des Ventilblocks (38), nach dem Ventilelement-Verbindungsschritt (S14), und
einen Anker-Verbindungsschritt (S16) zum Verbinden des Ankers (118) mit dem zweiten Ende (110) des Stabes (112), nach dem Einführschritt (S14).

9. Stromerzeugungsvorrichtung vom Typ für erneuerbare Energie zum Erzeugen von elektrischem Strom aus erneuerbarer Energie, wobei die Vorrichtung umfasst:
eine Hauptwelle (10), die dafür ausgelegt ist, sich unter der Wirkung der erneuerbaren Energie zu drehen,
eine Hydraulikpumpe (12), die dafür konfiguriert ist, Arbeitsfluid mittels Drehmoment von der Hauptwelle (10) mit Druck zu beaufschlagen und abzulassen,
einen Hydraulikmotor (14), der dafür konfiguriert ist, ein Drehmoment unter Verwendung von Druck des Arbeitsfluids bereitzustellen, das aus der Hydraulikpumpe (12) abgelassen wird, und
einen Generator (16), der dafür konfiguriert ist, Strom unter Verwendung des Drehmoments zu erzeugen, das durch den Hydraulikmotor (14) erzeugt wird,
wobei die Hydraulikpumpe (12) oder der Hydraulikmotor (14) durch eine Radialkolbenfluidmaschine gebildet wird,
wobei die Fluidmaschine umfasst:
eine Drehwelle (20),
ein Gehäuse (23), das mindestens einen Zylinderteil (22) aufweist, der sich entlang einer radialen Richtung der Drehwelle erstreckt,
einen Kolben (26), der in dem mindestens einen Zylinderteil (22) angeordnet ist und eine Arbeitskammer (24) mit dem mindestens einen Zylinderteil (22) bildet,
einen Konvertierungsmechanismus (32, 34, 36) zum Ausführen einer Konvertierung zwischen einer Rotationsbewegung der Drehwelle und einer Hin- und Herbewegung des Kolbens (26),
mindestens ein Hochdruckventil (28) zum Steuern der Strömung eines Hochdruckarbeitsfluids, und
mindestens ein Niederdruckventil (30) zum Steuern der Strömung eines Niederdruckarbeitsfluids, und
wobei das Hochdruckventil (28) oder das Niederdruckventil (30) durch ein Steuerventil nach einem der Ansprüche 1 bis 7 gebildet wird.

10. Stromerzeugungsvorrichtung vom Typ für erneuerbare Energie nach Anspruch 9,
wobei das Steuerventil das Niederdruckventil (30) des Hydraulikmotors bildet.

11. Stromerzeugungsvorrichtung vom Typ für erneuerbare Energie nach Anspruch 9 oder 10, ferner umfassend:
mindestens einen Flügel (105), der dafür konfiguriert ist, die Hauptwelle (10) unter der Einwirkung von Wind als die erneuerbare Energie zu drehen,
wobei die Stromerzeugungsvorrichtung vom Typ für erneuerbare Energie ein Windturbinengenerator ist.

## Revendications

1. Soupape de commande (30) destinée à être disposée à la périphérie d'une chambre de travail (24) constituée d'un cylindre (22) et d'un piston (26), pour commander l'alimentation en fluide de travail de la chambre de travail (24) ou pour commander l'évacuation du fluide de travail hors de la chambre de travail (24), la soupape de commande comprenant :
un siège de soupape (106) ;
une tige (112) ayant une première (108) extrémité et une deuxième extrémité (110) ;
une unité d'élément de soupape (116) qui est connectée à la première extrémité (108) de la tige (112) et qui comprend au moins un élément de soupape (114) ;
une armature (118) connectée à la deuxième extrémité (110) de la tige (112) ;
un élément de précontrainte (120) permettant de pré-contraindre l'armature (118) dans une direction de précontrainte ;
un électro-aimant (122) conçu pour attirer l'armature (118) et entraîner l'armature (118) dans une direction opposée à la direction de précontrainte lorsque de l'énergie électrique est appliquée ; et
un bloc soupape (38) comprenant : une paroi (124) dans laquelle le siège de soupape (106) est formé ; un passage interne (126) pour le fluide de travail, avec une extrémité ouverte limitée par le siège de soupape (106) ; une chambre de confinement (128) pour loger l'armature (118) et l'électro-aimant (122) ; et un trou traversant (130) qui s'étend entre la paroi (124) et la chambre de confinement (128) et dans lequel la tige (112) est insérée,
la deuxième extrémité (110) de la tige (112) étant conçue pour passer à travers le trou traversant (130),
ladite soupape de commande (30) étant **caractérisée en ce que** l'unité d'élément de soupape (116) est connectée à la première extrémité (108) par un élément de retenue (132) qui est fixé à la première extrémité (108) de la tige (112),
l'élément de retenue (132) étant constitué d'un élément annulaire qui est fixé à la première extrémité (108) de la tige (112),
la tige (112) comprenant une partie de bride de fixation (134) permettant de connecter l'unité d'élément de soupape (116) et la première extrémité (108) de la tige (112) de manière coopérante avec l'élément annulaire ; et
la soupape de commande comprend en outre une dépression d'amortissement (136) permettant d'amortir les vibrations de la tige (112) de manière coopérante avec une bride d'amortissement,
la bride d'amortissement étant constituée de la bride de fixation (134).

2. Soupape de commande (30) selon la revendication 1, dans laquelle le bloc soupape (38) comprend :
un corps de bloc soupape (138, 148) comprenant une chambre de confinement (128) ;
une partie de connexion de bloc soupape (140, 150) qui est connectée au corps de bloc soupape (138),
le corps de bloc soupape (138) étant conçu pour être fixé, par l'intermédiaire de la partie de connexion de bloc soupape (140), à un boîtier (23) qui comprend la partie cylindrique (22),
le corps de bloc soupape (138) comprenant une partie cylindrique (144) présentant une rainure filetée (142) formée sur une partie d'une périphérie externe, et
la partie de connexion du bloc soupape (140) comprenant une partie de trou fileté (146) destiné à être emboîté, à l'aide du filetage, avec la rainure filetée (142) de la partie de la partie cylindrique (144).

3. Soupape de commande selon l'une des revendications 1 ou 2,
l'électro-aimant (122) comprenant un stator (158) et un solénoïde (160), et
la soupape de commande (38) comprenant en outre un boîtier (168), ce boîtier comprenant une partie en forme de coupe (164) formant, avec le stator (158), une chambre d'armature (162) dans laquelle l'armature (118) est disposée, et une partie de guidage cylindrique (166) qui est disposée dans le trou traversant (130) et dans laquelle la tige (112) est insérée de manière coulissante.

4. Soupape de commande (30) selon l'une des revendications 1 à 3, dans laquelle l'élément de soupape (114) présente une forme annulaire et comprend deux lignes d'étanchéité concentriques (170, 172), et
l'unité d'élément de soupape (116) comprenant au moins un élément élastique (174) qui est disposé entre la tige (112) et l'élément de soupape (114).

5. Soupape de commande selon l'une des revendications 1 à 4,
l'électro-aimant (122) comprenant un stator (158) et un solénoïde (160) et
l'élément de précontrainte (120) étant disposé entre le stator (158) et l'armature (118).

6. Soupape de commande (30) selon l'une des revendications 1 à 5, dans laquelle le bloc soupape (38) comprend en outre un passage d'ajustement de pression de retour (180) qui s'étend entre le passage interne (126) et la chambre de confinement (128).

7. Soupape de commande (30) selon l'une des revendications 4 à 6, comprenant en outre :
une partie annulaire (182) disposée plus loin du siège de soupape (106) que l'élément de soupape (114) et disposée de façon à faire face à l'élément de soupape (114) ; et
une partie de bordure (184) s'étendant d'un bord externe de la partie annulaire (182) vers le siège de soupape (106), la partie de bordure (184) étant conçue pour entourer l'élément de soupape (114) lorsque l'élément de soupape (114) est délogé.

8. Procédé d'assemblage d'une soupape de commande selon l'une des revendications 1 à 7, destinée à être disposée sur une périphérie d'une chambre de travail (24) formée d'un cylindre et d'un piston pour commander l'alimentation en fluide de travail de la chambre de travail (24) ou pour commander l'évacuation du fluide de travail hors de la chambre de travail (24), **caractérisé en ce que** le procédé comprend :
une étape de préparation de bloc soupape (S10) pour la préparation d'un bloc soupape (38), comprenant : une paroi (124) dans laquelle un siège de soupape (106) est formé ; un passage interne (126) pour le fluide de travail avec une extrémité ouverte limitée par le siège de soupape (106) ; une chambre de confinement (128) pour loger une armature (118), un élément de précontrainte (120) et un électro-aimant (122) ; et un trou traversant (130) qui s'étend entre la paroi (124) et la chambre de confinement (128) et dans lequel une tige (112) est insérée ;
une étape de connexion d'élément de soupape (S12) pour la connexion d'une unité d'élément de soupape (116), comprenant au moins un élément de soupape (114), à une première extrémité (108) de la tige (112) ;
une étape d'insertion (S14) pour l'insertion d'une deuxième extrémité (110) de la tige (112) dans le trou traversant (130) du bloc soupape (38) après l'étape de connexion d'élément de soupape (S14) ; et
une étape de connexion d'armature (S16) pour la connexion de l'armature (118) à la deuxième extrémité (110) de la tige (112) après l'étape d'insertion (S14).

9. Appareil de génération d'électricité à énergie renouvelable pour la génération d'électricité à partir d'énergie renouvelable, cet appareil comprenant :
un arbre principal (10) conçu pour tourner à l'aide de l'énergie renouvelable ;
une pompe hydraulique (12) conçue pour pressuriser et évacuer le fluide de travail à l'aide du couple de l'arbre principal (10) ;
un moteur hydraulique (14) conçu pour fournir un couple à l'aide grâce à la pression du fluide de travail évacué par la pompe hydraulique (12) ; et
un générateur (16) conçu pour générer de l'électricité grâce au couple fourni par le moteur hydraulique (14),
la pompe hydraulique (12) ou le moteur hydraulique (14) étant constitué d'une machine à fluide à piston radial,
la machine à fluide comprenant :
un arbre rotatif (20) ;
un carter (23) comprenant au moins une partie cylindrique (22) s'étendant le long d'une direction radiale de l'arbre rotatif ;
un piston (26) disposé dans l'au moins une partie cylindrique (22) et formant une chambre de travail (24) avec l'au moins une partie cylindrique (22) ;
un mécanisme de conversion (32, 34, 36) pour effectue une conversion entre le mouvement de rotation de l'arbre rotatif et le mouvement alternatif du piston (26) ;
au moins une soupape à haute pression (28) pour contrôler le débit de fluide de travail sous haute pression ; et
au moins une soupape à basse pression (30) pour contrôler le débit de fluide de travail sous basse pression, et
la soupape à haute pression (28) ou la soupape à basse pression (30) étant constituée d'une soupape de commande selon l'une des revendications 1 à 7.

10. Appareil de génération d'électricité à énergie renouvelable selon la revendication 9, dans lequel la soupape de commande constitue la soupape à basse pression (30) du moteur hydraulique.

11. Appareil de génération d'électricité à énergie renouvelable selon la revendication 9 ou 10, comprenant en outre :
au moins une pale (105) conçue pour faire tourner l'arbre rotatif (10) lors de la réception de vent en tant qu'énergie renouvelable,
l'appareil de génération d'électricité à énergie renouvelable étant un générateur à éolienne.
